(19) **Europäisches Patentamt / European Patent Office / Office européen des brevets**

(11) **EP 4 703 449 A1**

(12) **EUROPEAN PATENT APPLICATION**
published in accordance with Art. 153(4) EPC

(43) Date of publication:
04.03.2026 Bulletin 2026/10

(21) Application number: 24797137.7

(22) Date of filing: 25.04.2024

(51) International Patent Classification (IPC):
$C09K\ 5/14^{(2006.01)}$        $C08G\ 59/18^{(2006.01)}$
$C08K\ 3/013^{(2018.01)}$      $C08K\ 5/10^{(2006.01)}$
$C08L\ 63/00^{(2006.01)}$

(52) Cooperative Patent Classification (CPC):
Y02E 60/10

(86) International application number:
PCT/JP2024/016292

(87) International publication number:
WO 2024/225392 (31.10.2024 Gazette 2024/44)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH MA MD TN

(30) Priority: 28.04.2023 JP 2023074820

(71) Applicant: Sekisui Chemical Co., Ltd.
Osaka-shi, Osaka 530-8565 (JP)

(72) Inventors:
• YOSHIOKA, Tetsurou
  Mishima-gun, Osaka 618-0021 (JP)
• KOBAYASHI, Yuusuke
  Mishima-gun, Osaka 618-0021 (JP)
• FURUKAWA, Atsushi
  Mishima-gun, Osaka 618-0021 (JP)
• IWAMOTO, Tatsuya
  Mishima-gun, Osaka 618-0021 (JP)

(74) Representative: Ter Meer Steinmeister & Partner
Patentanwälte mbB
Nymphenburger Straße 4
80335 München (DE)

(54) **THERMALLY CONDUCTIVE COMPOSITION, TWO-COMPONENT CURABLE THERMALLY CONDUCTIVE MATERIAL, SUPPLY FORM OF TWO-COMPONENT CURABLE THERMALLY CONDUCTIVE MATERIAL, AND BATTERY MODULE**

(57) The thermally conductive composition of the present invention includes at least one curable compound selected from the group consisting of an epoxy compound or an epoxy curing agent, a thermally conductive filler and a structural viscosity imparting agent, wherein the thermally conductive composition has a viscosity ratio $(\eta 1/\eta 3)$ between a viscosity $\eta 1$ measured by a rheometer under conditions of a measurement temperature of 25°C and a shear rate of 0.0001 (1/s) and a viscosity $\eta 3$ measured by a rheometer under conditions of a measurement temperature of 25°C and a shear rate of 0.0251 (1/s) of 60 or more. The present invention can provide a thermally conductive composition in which settling down of the thermally conductive filler is suppressed in storage and which has excellent handling properties in use.

**Description**

Technical Field

The present invention relates to a thermally conductive composition, a two-part curable thermally conductive material, a supply form of a two-part curable thermally conductive material, and a battery module.

Background Art

Cured products formed by filling a thermally conductive composition including a thermally conductive filler between a heating element and a heat dissipating element and then curing the composition are used as a thermally conductive member that transfers the heat generated by the heating element to the heat dissipating element. Thermally conductive compositions are flowable, and thus any gap between a heating element and a heat dissipating element can be filled with the thermally conductive composition. Therefore, thermally conductive compositions can reliably fill the gap between the heating element and the heat dissipating element even if the gap is irregular, and thus is used as a gap filler in battery module and the like. Furthermore, thermally conductive members formed from a thermally conductive composition are placed between a battery cell, which is a heating element, and a module housing, which is a heat dissipating element, and can be used to dissipate heat from battery cells to the outside. Thermally conductive members are also placed between battery cells to secure them and keep them apart.

It is generally desired that such thermally conductive compositions have workability to be dispensed at a sufficient rate from a cartridge or syringe, storage stability that does not allow the thermally conductive filler to settle down during storage, compressibility (handling properties) that does not cause stress when pressed against an object to be used, such as a battery cell, and sufficient thermal conductivity and adhesion after curing.

Patent Literature 1 discloses an invention relating to a thermally conductive composition with high thermal conductivity, which includes a trifunctional or higher epoxy resin (epoxy compound) having no aromatic backbone, a liquid bifunctional or lower epoxy compound, a curing agent, a silane compound having no functional groups other than an alkoxy group, and a specific thermally conductive filler.

Citation List

Patent Literature

PTL 1: JP 2022-116587 A

Summary of Invention

Technical Problem

When an epoxy compound with low viscosity was used to improve workability and handling properties of a thermally conductive composition containing an epoxy compound and a thermally conductive filler, as in the invention disclosed in Patent Literature 1, there was the problem in which the thermally conductive filler settled down during storage, or the epoxy compound underwent liquid-phase separation, leading to quality degradation.

Accordingly, an object of the present invention is to provide a thermally conductive composition containing a curable compound selected from an epoxy compound and an epoxy curing agent and a thermally conductive filler, in which settling down of the thermally conductive filler is suppressed in storage and which has excellent handling properties in use.

Solution to Problem

The present inventors have conducted intensive studies to solve the above problem. As a result, the present inventors have found that the above problem can be solved by a thermally conductive composition containing at least one curable compound selected from the group consisting of an epoxy compound or an epoxy curing agent, a thermally conductive filler and a structural viscosity imparting agent, which has a viscosity ratio at or above a certain level measured by a rheometer under specific conditions, and have completed the present invention.

That is, the present invention provides the following [1] to [14].

[1] A thermally conductive composition comprising:

at least one curable compound selected from the group consisting of an epoxy compound or an epoxy curing agent,
a thermally conductive filler, and
a structural viscosity imparting agent,
the thermally conductive composition having a viscosity ratio ($\eta$1/$\eta$3) between a viscosity $\eta$1 measured by a rheometer under conditions of a measurement temperature of 25°C and a shear rate of 0.0001 (1/s) and a viscosity $\eta$3 measured by a rheometer under conditions of a measurement temperature of 25°C and a shear rate of 0.0251 (1/s) of 60 or more.

[2] The thermally conductive composition according to [1] above, wherein the thermally conductive composition has a viscosity $\eta$2 measured under conditions of a measurement temperature of 25°C and a shear rate of 25.1 (1/s) of 125 Pa·s or less.

[3] The thermally conductive composition according to [1] or [2] above, wherein the structural viscosity imparting agent is a compound having a melting point of more than 25°C.

[4] The thermally conductive composition according to any of [1] to [3] above, wherein the structural viscosity imparting agent is an ester compound having a melting point of more than 25°C and 120°C or less.

[5] The thermally conductive composition according to any of [1] to [4] above, wherein the curable compound is an epoxy compound.

[6] The thermally conductive composition according to any of [1] to [4] above, wherein the curable compound is an epoxy curing agent.

[7] The thermally conductive composition according to [6] above, wherein the epoxy curing agent is an amine compound.

[8] A two-part curable thermally conductive material, comprising a combination of a first part comprising the thermally conductive composition according to [5] above and a second part comprising the thermally conductive composition according to [6] above.

[9] A supply form of a two-part curable thermally conductive material, comprising a combination of

a first container filled with a first part comprising a thermally conductive composition comprising an epoxy compound, a thermally conductive filler and a structural viscosity imparting agent, and
a second container filled with a second part comprising a thermally conductive composition comprising an epoxy curing agent, a thermally conductive filler and a structural viscosity imparting agent,
each of the first part and the second part having a viscosity ratio ($\eta$1/$\eta$3) between a viscosity $\eta$1 measured by a rheometer under conditions of a measurement temperature of 25°C and a shear rate of 0.0001 (1/s) and a viscosity $\eta$3 measured by a rheometer under conditions of a measurement temperature of 25°C and a shear rate of 0.0251 (1/s) of 60 or more.

[10] A thermally conductive member, which is a cured product of the thermally conductive composition according to any of [1] to [7] above.

[11] A thermally conductive member, which is a cured product of the two-part curable thermally conductive material according to [8] above.

[12] A battery module comprising: a gap filler comprising the thermally conductive member according to [10] or [11] above; a plurality of battery cells; and a module housing that houses the plurality of battery cells, wherein the gap filler is arranged in the module housing.

[13] A method for producing a thermally conductive composition, the method comprising performing: a step of preparing a mixture comprising at least one curable compound selected from the group consisting of an epoxy compound or an epoxy curing agent, a thermally conductive filler and a structural viscosity imparting agent; a step of heating the mixture; and a step of cooling the mixture to adjust a viscosity ratio ($\eta$1/$\eta$3) between a viscosity $\eta$1 of the mixture measured by a rheometer under conditions of a measurement temperature of 25°C and a shear rate of 0.0001 (1/s) and a viscosity $\eta$3 of the mixture measured by a rheometer under conditions of a measurement temperature of 25°C and a shear rate of 0.0251 (1/s) to 60 or more.

[14] A method for producing a supply form of a thermally conductive composition, the method comprising performing: a step of preparing a mixture comprising at least one curable compound selected from the group consisting of an epoxy compound or an epoxy curing agent, a thermally conductive filler and a structural viscosity imparting agent; a step of filling a container with the mixture; a step of heating the mixture; and a step of cooling the mixture to adjust a viscosity ratio (n1/n3) between a viscosity $\eta$1 of the mixture measured by a rheometer under conditions of a measurement temperature of 25°C and a shear rate of 0.0001 (1/s) and a viscosity $\eta$3 of the mixture measured by a rheometer under conditions of a measurement temperature of 25°C and a shear rate of 0.0251 (1/s) to 60 or more.

Advantageous Effects of Invention

The present invention can provide a thermally conductive composition which can suppress settling down of thermally conductive filler in storage and which has excellent handling properties in use.

Brief Description of Drawings

[Fig. 1] Fig. 1 is a schematic view illustrating a container set according to an embodiment.
[Fig. 2] Fig. 2 is a schematic view illustrating a container set according to an embodiment.
[Fig. 3] Fig. 3 is a perspective view illustrating a typical structure of a battery module according to the present invention.
[Fig. 4] Fig. 4 is a perspective view illustrating a typical structure of a battery cell in a battery module.
[Fig. 5] Fig. 5 is a perspective view illustrating a battery assembly with a cell-to-pack structure.

Description of Embodiments

[Thermally conductive composition]

In the following, the thermally conductive composition of the present invention will be described in detail.

The thermally conductive composition of the present invention contains at least one curable compound selected from the group consisting of an epoxy compound or an epoxy curing agent, a thermally conductive filler and a structural viscosity imparting agent. The thermally conductive composition of the present invention has a viscosity ratio ($\eta1/\eta3$) between a viscosity $\eta1$ measured by a rheometer under conditions of a measurement temperature of 25°C and a shear rate of 0.0001 (1/s) and a viscosity $\eta3$ measured by a rheometer under conditions of a measurement temperature of 25°C and a shear rate of 0.0251 (1/s) of 60 or more.

<Viscosity ratio>

The thermally conductive composition of the present invention has a viscosity ratio ($\eta1/\eta3$) measured by a rheometer of 60 or more. When the viscosity ratio ($\eta1/\eta3$) is less than 60, the thermally conductive filler is likely to settle down when the thermally conductive composition is stored, and handling properties tend to be deteriorated when used. The handling properties in use mean properties corresponding to the compressibility evaluated in Examples described later.

To suppress settling down of the thermally conductive filler in storage and enhance handling properties in use, the thermally conductive composition has a viscosity ratio ($\eta1/\eta3$) measured by a rheometer of preferably 70 or more, more preferably 80 or more, even more preferably 100 or more and further preferably 140 or more. The upper limit of the viscosity ratio ($\eta1/\eta3$) is not particularly limited, and for example 500.

While details of how to adjust the viscosity ratio ($\eta1/\eta3$) will be described later, when the thermally conductive composition includes a structural viscosity imparting agent, and heated and cooled, a loose bond (inner structure) is formed due to cohesive force as described later, and thus the viscosity ratio ($\eta1/\eta3$)measured by a rheometer becomes 60 or more.

In the present description, the range written with "to" means a range from equal to or more than the predetermined numerical value before the "to" to equal to or less than the predetermined numerical value after the "to".

Although the reason why adjusting the viscosity ratio ($\eta1/\eta3$)as described above leads to suppression of the settling down of the thermally conductive filler when a thermally conductive composition is stored and improves its handling properties when used is not clear, the reason is assumed to be as follows.

Both viscosity $\eta1$ and viscosity $\eta3$ represent a viscosity in the low shear rate region. When a thermally conductive composition has a viscosity ratio ($\eta1/\eta3$) of 60 or more, its viscosity changes significantly relative to the change in the shear rate in the low shear rate region. In other words, the slope in a graph illustrating the relation between the shear rate (the horizontal axis) and the viscosity (the vertical axis) increases. This means that when the thermally conductive composition is stored, i.e., when the shear rate is very small, the thermally conductive composition has high viscosity, and thus the settling down of the thermally conductive filler is suppressed. When the thermally conductive composition is used after storage, the shear rate is relatively increased, because, for example, the thermally conductive composition is discharged from a dispenser or coating is compressed. At that stage, the viscosity of the thermally conductive composition is effectively reduced as the shear rate is increased, and thus handling properties are improved.

In the present invention, it is important to adjust the viscosity ratio ($\eta1/\eta3$) as described above, and thus individual values of viscosity $\eta1$ and viscosity $\eta3$ are not particularly limited. However, to suppress settling down of the thermally conductive filler, the thermally conductive composition has a viscosity η1 of, for example, 50,000 Pa·s or more, preferably 100,000 Pa·s or more, more preferably 500,000 Pa·s or more, even more preferably 1,000,000 Pa·s or more. The upper limit of viscosity η1 is not particularly limited, and for example is 5,000,000 Pa·s.

The thermally conductive composition has a viscosity η2 measured by a rheometer under conditions of a measurement temperature of 25°C and a shear rate of 25.1 (1/s) of preferably 125 Pa·s or less, more preferably 100 Pa·s or less and even more preferably 80 Pa·s or less from the viewpoint of the enhancement in compressibility and the enhancement in handling properties. The lower limit of viscosity η2 is not limited, and for example, is 10 Pa·s.

Viscosity η1, viscosity η2 and viscosity η3 of the thermally conductive composition are measured by a rheometer at 25°C. When viscosity is measured by a rheometer, the thermally conductive composition is heated and then cooled to room temperature (25°C) and then the viscosity is measured, in order to assess the viscosity while eliminating impact of shear when the sample is set on the measurement tool. At that stage the heating temperature may be at or above the melting point of the structural viscosity imparting agent, and preferably the melting point +50°C or less. The heating temperature may be set in the range of 35 to 170°C. Details of measurement conditions of the rheometer will be described in Examples.

Viscosity η1, viscosity η2 and viscosity η3 and the viscosity ratio (η1/η3) of the thermally conductive composition may be adjusted based on the type, the amount and the like of the structural viscosity imparting agent and the thermally conductive filler described later.

<Structural viscosity imparting agent>

The thermally conductive composition of the present invention contains a structural viscosity imparting agent. The structural viscosity imparting agent is preferably a compound that is solid at room temperature (25°C), and by mixing this to the curable compound described later and leaving the mixture under specific conditions, the viscosity can be increased. More specifically, the structural viscosity imparting agent has a function of increasing the viscosity in the low shear rate region when added to and mixed with a curable compound and heated and cooled, compared to the viscosity before heating. The structural viscosity imparting agent is a compound having a melting point of more than 25°C, more preferably a compound having a melting point of 40°C or more, and even more preferably a compound having a melting point of 45°C or more. The structural viscosity imparting agent is a compound having a melting point of preferably 120°C or less, more preferably a compound having a melting point of 100°C or less, and even more preferably a compound having a melting point of 85°C or less.

By mixing the curable compound and the structural viscosity imparting agent at room temperature and heating them to a temperature equal to or higher than the melting point of the structural viscosity imparting agent and cooling to room temperature, a loose bond (inner structure) is formed in the mixture of the curable compound and the structural viscosity imparting agent. The loose bond is formed due to the cohesive force in the structural viscosity imparting agent and is not broken by gravity. For this reason, settling down of the thermally conductive filler can be suppressed in storage. Then, upon use, a certain level of shear is applied to the mixture, and thus the above loose bond is broken, and the viscosity is reduced to enhance workability including coating properties and compressibility.

In other words, the structural viscosity imparting agent forms the above inner structure due to the cohesive force, and this increases the viscosity in the low shear rate region. In this regard, the cohesive force means the action of mutual adherence and bonding of compounds with a similar structure. Furthermore, the loose bond is formed in the process of heating at the melting point or more and cooling. Moreover, the loose bond is broken by shear stress. Therefore, the loose bond is broken when shear stress is generated after cooling, and the bond can be formed again by heating and cooling.

To allow the above function to be effective, it is preferable that the structural viscosity imparting agent is not separated from the curable compound for a predetermined time when the structural viscosity imparting agent is heated to liquid.

Inclusion of the structural viscosity imparting agent in the thermally conductive composition of the present invention makes it easier to adjust the viscosity to the above viscosity and the viscosity ratio to the above viscosity ratio.

A structural viscosity imparting agent having the above function may be used without limitation. Specific examples of structural viscosity imparting agents preferably include an ester compound that is solid at 25°C (hereinafter referred to as ester compound X) or an alcohol compound that is solid at 25°C. Of them, an ester compound that is solid at 25°C is more preferred.

The ester compound X has a melting point of preferably more than 25°C, more preferably 40°C or more, and even more preferably 45°C or more. The ester compound X has a melting point of preferably 120°C or less, more preferably 100°C or less, and even more preferably 85°C or less.

When the structural viscosity imparting agent is an ester compound X with the above melting point, the viscosity ratio (η1/η3) can be easily adjusted to the above desired range, and a thermally conductive composition which can suppress settling down of thermally conductive filler in storage and which has excellent handling properties in use can be easily obtained.

The melting point of the ester compound X is determined from the temperature of the peak in the endothermic peak of the ester compound in the measurement using a differential scanning calorimeter (DSC). More specifically, the thermally conductive composition of the present invention including the ester compound X is subjected to a measurement by a differential scanning calorimeter (DSC), and the peak temperature in the endothermic curve due to the melting of the ester compound is determined as the melting point of the ester compound X.

The ester compound X has an ester group. The ester compound X may be a monoester having an ester group or those having 2 or more ester groups, such as diester. Monoester and diester are preferred.

The number of carbon atoms of the ester compound X is not particularly limited as long as the ester compound X is solid at 25°C. The ester compound X has, for example, 20 or more, preferably 25 or more, more preferably 28 or more, and preferably 150 or less, more preferably 100 or less, and even more preferably 50 or less carbon atoms.

It is preferable that the ester compound X is an ester of fatty acid and alcohol.

Fatty acid has preferably 2 to 30 carbon atoms, and more preferably 10 to 24 carbon atoms. The number of carbon atoms of fatty acid means the total number of carbon atoms including carbonyl carbon in the carboxyl group.

Alcohol may have a hydroxyl group or two or more hydroxyl groups. Alcohol has preferably 2 to 30 carbon atoms, and more preferably 4 to 24 carbon atoms.

Cetyl myristate, pentaerythritol distearate, myristyl myristate, myristyl stearate, stearyl stearate, behenyl behenate, glycerol monostearate ester, ethylene glycol distearate ester and the like are preferred as the ester compound X. Of them, the ester compound X is preferably at least one selected from myristyl myristate, stearyl stearate or behenyl behenate.

One ester compound X may be used alone or two or more of them may be used in combination.

When an alcohol compound that is solid at 25°C is used as the structural viscosity imparting agent, the alcohol compound has a melting point of preferably more than 25°C, more preferably 30°C or more, and even more preferably 40°C or more. The alcohol compound has a melting point of preferably 120°C or less, more preferably 80°C or less, and even more preferably 75°C or less.

When the structural viscosity imparting agent is an alcohol compound with the above melting point, the viscosity ratio ($\eta1/\eta3$)can be easily adjusted to the above desired range, and a thermally conductive composition which can suppress settling down of thermally conductive filler in storage and which has excellent handling properties in use can be easily obtained.

The alcohol compound has a hydroxyl group. The alcohol compound may be a monoalcohol having a hydroxyl group or those having 2 or more hydroxyl groups, such as dialcohol. Monoalcohol is preferred.

The number of carbon atoms of the alcohol compound is not particularly limited as long as the alcohol compound is solid at 25°C. The alcohol compound has, for example, 14 or more, preferably 16 or more and more preferably 18 or more, and preferably 40 or less, more preferably 36 or less and even more preferably 30 or less carbon atoms.

Furthermore, the alcohol compound has, for example, preferably 14 to 40, more preferably 16 to 36, and even more preferably 18 to 30 carbon atoms.

Preferred as the alcohol compound is myristyl alcohol, cetanol, stearyl alcohol, nonadecyl alcohol, arachidyl alcohol, heneicosanol, behenyl alcohol, lignoceryl alcohol, ceryl alcohol, montanyl alcohol, myricyl alcohol, 1-dotriacontanol, or gedyl alcohol. One alcohol compound may be used alone or two or more of them may be used in combination.

Of the above ester compound X and the above alcohol compound, the ester compound X is preferred as the structural viscosity imparting agent because it has excellent storage stability.

The content of the structural viscosity imparting agent in the thermally conductive composition is preferably 0.5 part by mass or more, more preferably 3 parts by mass or more, and even more preferably 6 parts by mass or more, and preferably 25 parts by mass or less, and more preferably 20 parts by mass or less based on 100 parts by mass of the curable compound.

Furthermore, the content of the structural viscosity imparting agent in the thermally conductive composition is preferably 0.5 to 20 parts by mass, more preferably 3 to 20 parts by mass, and even more preferably 6 to 20 parts by mass based on 100 parts by mass of the curable compound.

<Curable compound>

The thermally conductive composition of the present invention contains a curable compound, and the curable compound is at least one selected from an epoxy compound or an epoxy curing agent. The curable compound is liquid at room temperature (25°C).

The epoxy curing agent is used to cure the epoxy compound, and the epoxy compound reacts with the epoxy curing agent and cures when they are mixed. Therefore, it is preferable to separate the epoxy compound from the epoxy curing agent and include and store each in an individual thermally conductive composition, and mix the individual thermally conductive compositions at the time of use as described in detail below.

The thermally conductive composition containing the epoxy compound forms a thermally conductive composition with moderate adhesive strength when mixed with a thermally conductive composition containing the epoxy curing agent.

(Epoxy compound)

The epoxy compound may be a compound having one or more epoxy groups. The epoxy compound may be a multifunctional epoxy compound having two or more epoxy groups or a monofunctional epoxy compound having one epoxy group.

When the thermally conductive composition contains an epoxy compound, the thermally conductive composition preferably contains at least a multifunctional epoxy compound. The inclusion of such a multifunctional epoxy compound allows the composition to be cross-linked properly, facilitating higher adhesive strength.

The thermally conductive composition more preferably contains a monofunctional epoxy compound in addition to the multifunctional epoxy compound. When the thermally conductive composition also contains a monofunctional epoxy compound, excessive increase in the cross-linking density after curing is prevented and elongation is likely to be enhanced. Furthermore, the use of the monofunctional epoxy compound makes it easier to reduce the viscosity of the thermally conductive composition before curing.

When a multifunctional epoxy compound and a monofunctional epoxy compound are used together, the mass ratio of the monofunctional epoxy compound to the multifunctional epoxy compound (monofunctional/multifunctional) is preferably 10/90 or more and 90/10 or less, more preferably 15/85 or more and 75/25 or less, and even more preferably 25/75 or more and 50/50 or less.

Examples of multifunctional epoxy compounds include a bifunctional epoxy compound and a trifunctional epoxy compound, and a bifunctional epoxy compound is preferably used. Specific examples of multifunctional epoxy compounds include, but are not limited to, an epoxy compound having an aromatic ring, such as a phenol novolac epoxy compound, a resorcinol epoxy compound, an epoxy compound with a bisphenol backbone, an epoxy compound with a naphthalene backbone, an epoxy compound with a fluorene backbone, an epoxy compound with a biphenyl backbone, an epoxy compound with a bi(glycidyloxyphenyl)methane backbone, an epoxy compound with a xanthene backbone, an epoxy compound with an anthracene backbone and an epoxy compound with a pyrene backbone.

Examples thereof also include an epoxy compound with an alicyclic backbone, such as an epoxy compound with a dicyclopentadiene backbone and an epoxy compound with an adamantane backbone.

Examples also include an aliphatic epoxy compound such as butanediol diglycidyl ether and neopentyl glycol diglycidyl ether.

A hydrogenated or modified product of the epoxy compounds listed above may also be used as the epoxy compound.

Examples of the epoxy compound with a bisphenol backbone described above include an epoxy compound with a bisphenol A, a bisphenol F or a bisphenol S backbone.

Examples of the resorcinol epoxy compound described above include resorcinol glycidyl ether.

Examples of the epoxy compound with a naphthalene backbone described above include 1,2-diglycidyl naphthalene, 1,5-diglycidyl naphthalene, 1,6-diglycidyl naphthalene, 1,7-diglycidyl naphthalene, 2,7-diglycidyl naphthalene, triglycidyl naphthalene and 1,2,5,6-tetraglycidyl naphthalene.

Examples of the epoxy compound with a fluorene backbone described above include 9,9-bis(4-glycidyloxyphenyl)fluorene, 9,9-bis(4-glycidyloxy-3-methylphenyl)fluorene, 9,9-bis(4-glycidyloxy-3-chlorophenyl)fluorene, 9,9-bis(4-glycidyloxy-3-bromophenyl)fluorene, 9,9-bis(4-glycidyloxy-3-fluorophenyl)fluorene, 9,9-bis(4-glycidyloxy-3-methoxyphenyl)fluorene, 9,9-bis(4-glycidyloxy-3,5-dimethylphenyl)fluorene, 9,9-bis(4-glycidyloxy-3,5-dichlorophenyl)fluorene and 9,9-bis(4-glycidyloxy-3,5-dibromophenyl)fluorene.

Examples of the epoxy compound with a biphenyl backbone described above include 4,4'-diglycidyl biphenyl and 4,4'-diglycidyl-3,3',5,5'-tetramethylbiphenyl. Examples of the epoxy compound with a bi(glycidyloxyphenyl)methane backbone described above include 1,1'-bi(2,7-glycidyloxynaphthyl)methane, 1,8'-bi(2,7-glycidyloxynaphthyl)methane, 1,1'-bi(3,7-glycidyloxynaphthyl)methane, 1,8'-bi(3,7-glycidyloxynaphthyl)methane, 1,1'-bi(3,5-glycidyloxynaphthyl)methane, 1,8'-bi(3,5-glycidyloxynaphthyl)methane, 1,2'-bi(2,7-glycidyloxynaphthyl)methane, 1,2'-bi(3,7-glycidyloxynaphthyl)methane and 1,2'-bi(3,5-glycidyloxynaphthyl)methane.

Examples of the epoxy compound with a xanthene backbone described above include 1,3,4,5,6,8-hexamethyl-2,7-bis-glycidylmethoxy-9-phenyl-9H-xanthene. Examples of the epoxy compound with an anthracene backbone described above include a compound with one or more anthracene backbones and two or more epoxy groups or glycidyl groups per molecule.

Examples of the epoxy compound with a pyrene backbone described above include a compound with one or more pyrene backbones and two or more epoxy groups or glycidyl groups per molecule.

Examples of the epoxy compound with a dicyclopentadiene backbone described above include dicyclopentadiene dioxide and a phenol novolac epoxy compound with a dicyclopentadiene backbone. Examples of the epoxy compound with an adamantane backbone described above include 1,3-bis(4-glycidyloxyphenyl)adamantane and 2,2-bis(4-glycidyloxyphenyl)adamantane.

Among the above multifunctional epoxy compounds, an epoxy compound having an aromatic ring is preferred, and an epoxy compound with a phenyl group is more preferred, and a bisphenol epoxy compound with a bisphenol backbone is even more preferred from the viewpoint of the enhancement in the adhesive strength and the mechanical strength.

One multifunctional epoxy compound may be used alone or two or more of them may be used in combination.

The monofunctional epoxy compound is preferably an aliphatic monofunctional epoxy compound from the viewpoint of the high safety of the raw material, and specific examples thereof include glycidyl ether of aliphatic alcohol. In this regard, aliphatic alcohol may have a branched structure or may be linear, and to achieve good elongation, aliphatic alcohol is preferably linear. Aliphatic alcohol may have about 4 to 24 carbon atoms, preferably 10 to 20 carbon atoms to achieve good elongation. Aliphatic alcohol is preferably saturated aliphatic alcohol to achieve good elongation. Specific examples of glycidyl ethers of aliphatic alcohol include butyl glycidyl ether, decyl glycidyl ether, lauryl glycidyl ether, myristyl glycidyl ether, cetyl glycidyl ether and stearyl glycidyl ether. The monofunctional epoxy compound may be other than those listed above, such as a monofunctional epoxy compound that does not have an ether group and has a glycidyl group, such as 1,2-epoxybutane and propylene oxide.

It is preferable to use an aliphatic monofunctional epoxy compound as the monofunctional epoxy compound, and especially glycidyl ether of aliphatic alcohol, to achieve good elongation.

A monofunctional epoxy compound with an aromatic ring may also be used as the monofunctional epoxy compound. Examples of monofunctional epoxy compounds with an aromatic ring include phenyl-based glycidyl ethers exemplified by phenyl glycidyl ether and alkylphenyl glycidyl ethers represented by 4-t-butylphenyl glycidyl ether, cresyl glycidyl ether, and nonylphenyl glycidyl ether, 1-glycidylnaphthalene and 2-glycidylnaphthalene. The monofunctional epoxy compound with an aromatic ring is more preferably an epoxy compound with a phenyl group.

One monofunctional epoxy compound may be used alone or two or more of them may be used in combination.

The epoxy compound preferably includes an epoxy compound with an aromatic ring, especially a phenyl group. The epoxy compound with an aromatic ring such as phenyl group may be a monofunctional epoxy compound or a multifunctional epoxy compound. Aromatic rings, especially phenyl groups, have a stacking structure after curing, which facilitates the epoxy compound to form a pseudo-crosslinked structure in the cured product. This allows the mechanical strength to be increased and the adhesive strength to be increased. It is preferable that the epoxy compound includes a multifunctional epoxy compound and the multifunctional epoxy compound has an aromatic ring, especially a phenyl group.

It is preferable to use an epoxy compound having a molecular weight of 2,000 or less, and the epoxy compound has a molecular weight of preferably 1,000 or less, and more preferably 500 or less. The use of the epoxy compound having a certain molecular weight or lower can reduce the viscosity of the thermally conductive composition and can increase the filling properties of the thermally conductive filler. The epoxy compound has a molecular weight of, for example, 100 or more, preferably 150 or more, more preferably 200 or more, and further preferably 250 or more. By setting the molecular weight of the epoxy compound above a certain threshold, it is possible to prevent the cross-link density from becoming excessively high, making it easier to achieve good elongation.

The epoxy equivalent of the epoxy compound is preferably 1,000 g/eq or less, more preferably 500 g/eq or less, and further preferably 375 g/eq or less, and preferably 100 g/eq or more, more preferably 125 g/eq or more, and further preferably 140 g/eq or more.

The epoxy compound is preferably liquid at room temperature (25°C). The lower the viscosity of the epoxy compound at 25°C, the better from the viewpoint of low viscosity, and the viscosity of the epoxy compound at 25°C may be, for example, 50 Pa·s or less, and is preferably 10 Pa·s or less. The viscosity of the epoxy compound at 25°C may be, for example, 0.5 mPa·s or more, and may be 1 mPa·s or more.

The viscosity of the multifunctional epoxy compound at 25°C may be, for example, 50 Pa·s or less, and is preferably 10 Pa·s or less, and is 1 mPa·s or more. In practice, the viscosity of the multifunctional epoxy compound at 25°C is preferably 10 mPa·s or more, and more preferably 100 mPa·s or more.

Meanwhile, the viscosity of the monofunctional epoxy compound at 25°C may be, for example, 10 Pa·s or less, and is preferably 1 Pa·s or less, and more preferably 100 mPa·s or less, and may be, for example, 0.5 mPa·s or more, 1 mPa·s or more, or 3 mPa·s or more.

When the epoxy compound includes both a multifunctional epoxy compound and a monofunctional epoxy compound, it is preferable that the viscosity of the monofunctional epoxy compound is lower than the viscosity of the multifunctional epoxy compound.

The viscosity of the epoxy compound and the amine compound described later is measured by using an E-type viscometer under conditions of 10 rpm and 25°C.

(Epoxy curing agent)

The epoxy curing agent is not limited as long as it can cure an epoxy compound, and examples thereof include an amine compound, a thiol compound, an acid anhydride compound and an epoxy curing catalyst. Of them, amine compounds are preferred from the viewpoint of ease of adjusting reactivity with the epoxy compound, ease of maintaining a low compressive load in the initial stage of curing when the epoxy compound is used in combination with a multifunctional acrylate compound as described below, and the ability to extend usable time.

{Amine compound}

The amine compound has an amino group. The number of amino groups of the amine compound is not limited, but it is preferable that the amine compound has two or more amino groups.

The amine compound having 2 or more amino groups can react with the epoxy compound and cure properly. The number of amino groups is not limited, and the amine compound has, for example, 10 or less, preferably 6 or less, and more preferably 4 or less amino groups. By keeping the number of amino groups at or below a certain level as described above, excessive progression of the curing reaction is inhibited and the usable time is likely to be longer. Furthermore, the number of amino groups is preferably 3 or more from the viewpoint of rapid curing.

The amine compound has preferably 2 or more and 10 or less, more preferably 3 or more and 6 or less, and further preferably 3 or more and 4 or less amino groups in order to achieve the balance between the usable time and rapid curing.

The amine compound may have a primary amino group or a secondary amino group, and preferably a primary amino group from the viewpoint of the reactivity and the curing rate. The amine compound preferably has one or more primary amino groups, more preferably two or more primary amino groups and further preferably three or more primary amino groups per molecule. Rapid curing can be achieved by an amine compound having many primary amino groups. The amine compound has, for example, 6 or less, preferably 5 or less, and more preferably 4 or less primary amino groups per molecule.

The amine compound has preferably 2 or more and 6 or less, more preferably 3 or more and 5 or less, and further preferably 3 or more and 4 or less primary amino groups per molecule in order to achieve the balance between the usable time and rapid curing. The amine compound having a primary amino group may have only a primary amino group or may have a primary amino group and a secondary or higher amino group.

The amine compound preferably has a viscosity of 20 Pa·s or less. If the viscosity is 20 Pa·s or less, the viscosity before curing is low and workability can be enhanced. The amine compound has a viscosity of preferably 15 Pa·s or less, more preferably 12 Pa·s or less, and even more preferably 5 Pa·s or less, and further preferably 2 Pa·s or less.

The viscosity of the amine compound is not limited, and the amine compound has a viscosity of, for example, 0.005 Pa·s or more, preferably 0.01 Pa·s or more, more preferably 0.025 Pa·s or more, and further preferably 0.05 Pa·s or more.

An amine compound with an oxyalkylene structure is preferably used. When the amine compound with an oxyalkylene structure is used, the compressive load in the initial stage of curing becomes suitably low due to its molecular structure, and the low compressive load can be maintained for a relatively long time, and the usable time is likely to be longer.

It is preferable that the above oxyalkylene structure has oxyalkylene having about 2 to 5 carbon atoms, and it is more preferable that the oxyalkylene structure has an oxypropylene structure. Examples of oxyalkylene structures include a polyoxyalkylene structure with 2 or more consecutive oxyalkylene structures, which are specifically a polyoxyethylene structure, a polyoxypropylene structure, a polyoxybutylene structure, a polyoxytetramethylene structure, an oxyethylene-oxypropylene copolymer structure and oxypropylene-oxybutylene copolymer structure. Of them, the amine compound preferably includes a polyoxypropylene structure, an oxyethylene-oxypropylene copolymer structure and an oxypropylene-oxybutylene copolymer structure, and particularly preferably a polyoxypropylene structure.

Examples of amine compounds with an oxyalkylene structure typically include an aliphatic amine, more specifically polyoxyalkylene polyamine such as polyoxyethylene diamine, poly(oxyethylene/oxypropylene)diamine, poly(oxypropylene)diamine, poly(oxybutylene/oxypropylene)diamine, polyethylene glycol bis(propylamine), trimethylolpropane poly(oxypropylene)triamine and glyceryl poly(oxypropylene)triamine. Of them, poly(oxypropylene)diamine, glyceryl poly(oxypropylene)triamine and trimethylolpropane poly(oxypropylene)triamine are preferred, and trimethylolpropane poly(oxypropylene)triamine is more preferred.

The amine compound without an oxyalkylene structure may be aliphatic amine, an aromatic ring-containing amine or amidoamine. Specific examples of aliphatic amine include, but are not limited to, a branched or linear alkanediamine such as 1,3-diaminopropane, 2-methyl-1,5-diaminopentane, trimethylhexamethylenediamine, 2-methylpentamethylenediamine and diethylaminopropylamine, and an alicyclic polyamine such as 1,3-bis(aminomethyl)cyclohexane, 1,4-bis(aminomethyl)cyclohexane, cyclohexanediamine, methylcyclohexanediamine and isophoronediamine.

Any type of low-viscosity amidoamine may be used.

The aromatic ring-containing amine may be an amine in which the amino group is not directly bonded to the aromatic ring, such as m-xylylenediamine and a reaction product of m-xylylenediamine and styrene, and an aromatic amine in which the amino group is directly bonded to aromatic ring.

The amine compound without an oxyalkylene structure is preferably an aromatic ring-containing amine in which the amino group is not directly bonded to the aromatic ring, such as a reaction product of m-xylylenediamine and styrene, and an aliphatic diamine so that the curing rate can be moderately fast and the compressive load can be certain level in the initial stage of curing.

Among the above, an aliphatic amine and an aromatic ring-containing amine in which the amino group is not directly bonded to the aromatic ring are preferred, and polyoxyalkylene polyamine is more preferred as the amine compound from the viewpoint of rapid curing and certain level compressive load in the initial stage of curing.

One amine compound may be used alone or two or more of them may be used in combination.

The molecular weight of the amine compound is not limited, and the amine compound may have a molecular weight of 5,000 or less, preferably 3,000 or less, more preferably 1,000 or less, and further preferably 600 or less. The use of the amine compound having a certain molecular weight or lower can reduce the viscosity of the thermally conductive composition and can increase the filling properties of the thermally conductive filler.

Furthermore, an amine compound having a molecular weight of, for example, 100 or more, preferably 110 or more, more preferably 200 or more, and further preferably 300 or more may be used. By setting the molecular weight of the amine compound above a certain threshold, the compressive load can be moderately reduced in the initial stage of curing and it is possible to prevent the cross-link density from becoming excessively high, making it easier to achieve good elongation and adhesive strength. The amine compound is preferably liquid at room temperature (25°C).

The molecular weight of the amine compound and the epoxy compound described above may be measured, for example, by a mass spectrometer (GC-MS or LC-MS).

The active hydrogen equivalent of the amine compound is not limited, and is preferably 15 g/eq or more, preferably 25 g/eq or more, more preferably 40 g/ eq or more, and, for example, 1,000 g/ eq or less, preferably 600 g/ eq or less, more preferably 300 g/ eq or less, and further preferably 150 g/ eq or less.

{Epoxy curing agent other than amine compound}

The thermally conductive composition of the present invention may contain an epoxy curing agent other than the amine compound as an epoxy curing agent.

Examples of epoxy curing agents other than the amine compound include a thiol compound, an acid anhydride compound and an epoxy curing catalyst.

Examples of thiol compounds include, but are not limited to, trimethylolpropane tris(3-mercaptopropionate), pentaerythritol tetrakis(3-mercaptobutyrate), trimethylolpropane tris(3-mercaptobutyrate) and trimethylolethane tris(3-mercaptobutyrate). These may be used singly or in combinations of two or more thereof.

Examples of acid anhydride compounds include phthalic anhydride, trimellitic anhydride, pyromellitic anhydride, maleic anhydride, tetrahydrophthalic anhydride, methyl tetrahydrophthalic anhydride, hexahydrophthalic anhydride, methylhexahydrophthalic anhydride and succinic anhydride. These may be used singly or in combinations of two or more thereof. When an acid anhydride compound is used, the epoxy curing catalyst described later is preferably used together.

Examples of epoxy curing catalysts include imidazole curing catalyst, an organic phosphorus curing catalyst, an amine curing catalyst and a tin catalyst.

When the epoxy curing catalyst is used, the epoxy curing catalyst agent is preferably used together with a plasticizer, in other words, the epoxy curing catalyst is preferably used by diluting with the plasticizer. The plasticizer is preferably liquid at room temperature (25°C). Specific examples of plasticizers include hydrocarbon oil such as ester oil and paraffin oil.

The thermally conductive composition of the present invention contains an epoxy compound or an epoxy curing agent as a curable compound as described above. The content of the curable compound in the thermally conductive composition is not limited, and preferably 3 to 80% by mass, more preferably 5 to 50% by mass, and further preferably 8 to 20% by mass based on the total amount of the thermally conductive composition.

<Multifunctional acrylate compound>

The thermally conductive composition of the present invention preferably contains a multifunctional acrylate compound. The multifunctional acrylate compound has 2 or more functional groups (i.e., (meth)acryloyl groups). In the present invention, when the thermally conductive composition contains the multifunctional acrylate compound, the composition quickly reacts with the amine compound and is rapidly curable, and a certain adhesive strength is imparted in the initial stage of curing.

Various (meth)acrylates may be used as the multifunctional acrylate compound, and an ester of a multifunctional diol and (meth)acrylic acid is preferred.

As used herein, "(meth)acryloyl group" means an acryloyl group or a methacryloyl group. "(Meth)acrylate" means either an acrylate or a methacrylate, and the same applies to other similar terms.

Of the multifunctional acrylate compounds, examples of bifunctional acrylate compounds include 1,3-butanediol di(meth)acrylate, 1,4-butanediol di(meth)acrylate, 1,6-hexanediol di(meth)acrylate, 1,9-nonanediol di(meth)acrylate, 1,10-decanediol di(meth)acrylate, 2-n-butyl-2-ethyl-1,3-propanediol di(meth)acrylate, dimethylol tricyclodecane di(meth)acrylate, ethylene glycol di(meth)acrylate, neopentyl glycol di(meth)acrylate, diethylene glycol di(meth)acrylate, tetraethylene glycol di(meth)acrylate, polyethylene glycol di(meth)acrylate, dipropylene glycol di(meth)acrylate, tripropylene glycol di(meth)acrylate, polypropylene glycol di(meth)acrylate, ethylene oxide adduct bisphenol A di(meth)acrylate, propylene oxide adduct bisphenol A di(meth)acrylate, ethylene oxide adduct bisphenol F di(meth)acrylate, dimethylol dicyclopentadienyl di(meth)acrylate, ethylene oxide modified di(meth)acrylate isocyanurate, 2-hydroxy-3-(meth)acryloyloxypropyl (meth)acrylate, carbonate diol di(meth)acrylate, polyether diol di(meth)acrylate, polyester diol di(meth)acrylate, polycaprolactone diol di(meth)acrylate and polybutadiene diol di(meth)acrylate.

Of the multifunctional acrylate compounds, examples of tri- or higher functional acrylate compounds include trimethylolpropane tri(meth)acrylate, glycerol tri(meth)acrylate, pentaerythritol tetra(meth)acrylate, an alkylene oxide adduct trimethylolpropane tri(meth)acrylate such as ethylene oxide adduct trimethylolpropane tri(meth)acrylate and propylene oxide adduct trimethylolpropane tri(meth)acrylate, caprolactone-modified trimethylolpropane tri(meth)acrylate, ethylene oxide adduct tri(meth)acrylate isocyanurate, propylene oxide adduct glycerol tri(meth)acrylate, ditrimethylolpropane tetra(meth)acrylate, alkylene oxide adduct pentaerythritol tetra(meth)acrylate, dipentaerythritol penta(meth)acrylate, dipentaerythritol hexa(meth)acrylate, tripentaerythritol octa(meth)acrylate, tetrapentaerythritol deca(meth)acrylate, tripentaerythritol hepta(meth)acrylate and tetrapentaerythritol nona(meth)acrylate.

The multifunctional acrylate compound has preferably 3 or more, more preferably 4 or more, and further preferably 6 or more functional groups. As the number of functional groups of the multifunctional acrylate compound increases, rapid curing is enhanced and the adhesive strength in the initial stage of curing tends to increase. The upper limit of the number of the functional groups of the multifunctional acrylate compound is not limited, and may be, for example, 10 or less, or 8 or less.

The molecular weight of the multifunctional acrylate compound should be at or below a certain level to enhance rapid curing and reduce the viscosity of the thermally conductive composition before curing. More specifically, the multifunctional acrylate compound may have a molecular weight of, for example, 5,000 or less, preferably 3,000 or less, more preferably 1,000 or less, and further preferably 700 or less. A multifunctional acrylate compound having a molecular weight of, for example, 150 or more, preferably 200 or more, more preferably 250 or more, and further preferably 450 or more may be used. By setting the molecular weight of the multifunctional acrylate compound above a certain threshold, the compressive load can be moderately reduced in the initial stage of curing and it is possible to prevent the cross-link density from becoming excessively high, making it easier to achieve good elongation and adhesive strength.

The multifunctional acrylate compound is preferably liquid at room temperature (25°C) in order to facilitate a reduction in the viscosity of the thermally conductive composition before curing.

The functional equivalent of the multifunctional acrylate compound is not limited, and is preferably 500g/ eq or less, more preferably 300 g/ eq or less, further preferably 150 g/ eq or less, and preferably 75 g/ eq or more, more preferably 80 g/ eq or more, and further preferably 85 g/ eq or more.

In the thermally conductive composition, the ratio of the number of the functional groups of the multifunctional acrylate compound to the number of the functional groups in the epoxy compound may be about 0.1 or more and 2.5 or less, preferably 0.3 or more and 1.5 or less, more preferably 0.6 or more and 1.2 or less, further preferably 0.75 or more and 1.1 or less. When the ratio of the number of the functional groups of the multifunctional acrylate compound is set to the predetermined range, the amine compound and the multifunctional acrylate compound are preferentially cured to develop rapid curing in the initial stage, while the reaction between the amine compound and the epoxy compound is inhibited to keep the compressive load low in the initial stage of curing, and the usable time can be longer.

The content of the multifunctional acrylate compound is preferably 10 parts by mass or more, more preferably 20 parts by mass or more, and further preferably 40 parts by mass or more, and preferably 100 parts by mass or less, more preferably 80 parts by mass or less, and further preferably 60 parts by mass or less based on 100 parts by mass of the curable compound.

When the content of the multifunctional acrylate compound is at or above the lower limit, rapid curing is likely to be developed and the adhesive strength can be enhanced in the initial stage of curing. When the content of the multifunctional acrylate compound is at or below the upper limit, excessive progression of the initial curing is inhibited and the initial compressive load can be easily kept low.

When the thermally conductive composition includes a multifunctional acrylate compound, the thermally conductive composition may also include water. The presence of water, for example, promotes the reaction between the multifunctional acrylate and the amine compound, facilitating rapid curing. The content of water is not limited and is, for example, 0.3% by mass or more and 2.0% by mass or less based on the total amount of the thermally conductive composition.

<Thermally conductive filler>

The thermally conductive composition of the present invention contains a thermally conductive filler. Inclusion of the thermally conductive filler enhances thermally conductivity of the thermally conductive composition and the thermally conductive member prepared from the thermally conductive composition.

Examples of thermally conductive fillers include metal, metal oxide, metal nitride, metal hydroxide, carbon materials, oxide, nitride and carbide of substances other than metal. Furthermore, examples of shapes of the thermally conductive filler include spherical powder and irregular shaped powder.

Examples of metal for the thermally conductive filler include aluminum, copper and nickel. Examples of metal oxides include aluminum oxide, which is typically alumina, magnesium oxide and zinc oxide. Examples of metal nitrides include aluminum nitride. Examples of metal hydroxides include aluminum hydroxide. Furthermore, examples of carbon materials include spherical graphite and diamond. Examples of oxides, nitrides and carbides of substances other than metal include quartz, boron nitride and silicon carbide. Of them, aluminum oxide and aluminum hydroxide are preferred as the thermally conductive filler, and aluminum hydroxide is more preferred.

One thermally conductive filler may be used alone or two or more of them may be used in combination.

The thermally conductive filler has an average particle size of preferably 0.1 to 200 $\mu$m, more preferably 0.3 to 120 $\mu$m, and even more preferably 0.5 to 100 $\mu$m.

It is preferable to use a small particle thermally conductive filler having an average particle size of 0.1 $\mu$m or more and 5 $\mu$m or less and a large particle thermally conductive filler having an average particle size of more than 5 $\mu$m and 200 $\mu$m or less in combination. Use of the thermally conductive filler having a different average particle size increases the filling ratio.

The average particle size of the thermally conductive filler may be measured in observation, for example, by an electron microscope. More specifically, the particle size of any 50 particles of the thermally conductive filler is measured using, for example, an electron microscope or an optical microscope and the average value (arithmetic mean value) may be determined as the average particle size.

The content of the thermally conductive filler is preferably 150 to 3,000 parts by mass, more preferably 300 to 2,000 parts by mass, and even more preferably 500 to 1,000 parts by mass based on 100 parts by mass of the curable compound.

By setting the content of the thermally conductive filler to the above lower limit or more, a certain level of thermal conductivity may be imparted to the thermally conductive composition and the thermally conductive member. By setting the content of the thermally conductive filler to the above upper limit or less, the thermally conductive filler can be dispersed in a good manner. This also prevents unnecessary increase in the viscosity of the thermally conductive composition.

<Anti-settle down agent>

The thermally conductive composition of the present invention may include an anti-settle down agent to the extent that the viscosity ratio ($\eta1/\eta3$) is within the above desired range. The inclusion of the anti-settle down agent helps to prevent settle down of the thermally conductive filler during storage. Examples of anti-settle down agents include a wax such as amide wax and hydrogenated castor oil wax and silica such as fumed silica. Of them, amide wax is preferred, and fatty acid amide wax is more preferred because the settling down of the thermally conductive filler is prevented during storage and the compressibility of the thermally conductive composition is enhanced. Fatty acid amide wax is a compound that has a long chain fatty acid group and an amide group in the molecule.

The content of the anti-settle down agent is not limited, and is preferably 0.01% by mass or more, and more preferably 0.05% by mass or more, and preferably 3% by mass or less, and more preferably 1% by mass or less based on the total amount of the thermally conductive composition.

Furthermore, the content of the anti-settle down agent is preferably 0.01 to 3% by mass, and more preferably 0.05 to 1% by mass based on the total amount of the thermally conductive composition.

<Dispersant>

The thermally conductive composition of the present invention may include a dispersant. The dispersant includes a polymer dispersant. The polymer dispersant includes a polymer compound having a functional group. Examples of polymer compounds include acrylic, vinyl, polyester, polyurethane, polyether, epoxy, polystyrene, amino and silicone compounds. Examples of functional groups include a carboxyl group, a phosphate group, a sulfonic acid group, a carboxylic acid ester group, a phosphoric acid ester group, sulfonic acid ester group, a hydroxyl group, an amino group, a quaternary ammonium salt group and an amide group. A dispersant other than a polymer dispersant may be used, and for example, an alkoxysilane compound may be used.

The content of the dispersant in the thermally conductive composition is preferably 0.01 part by mass or more and 10 parts by mass or less, more preferably 0.05 parts by mass or more and 5 parts by mass or less, and further preferably 0.1 part by mass or more and 3 parts by mass or less based on 100 parts by mass of the curable compound.

<Other additives>

The thermally conductive composition of the present invention may contain an additive other than the anti-settle down agent or the dispersant described above. Examples of other additives include a flame retardant, an antioxidant and a colorant.

<Supply form of thermally conductive composition>

The present invention also provides a supply form of a thermally conductive composition, being the thermally conductive composition described above filled in a container. Examples of containers include a syringe, a cartridge, a pail can and a drum.

<Method for producing thermally conductive composition>

The method for producing a thermally conductive composition of the present invention includes a step of preparing a mixture containing a curable compound, a thermally conductive filler and a structural viscosity imparting agent; a step of heating the mixture; and a step of cooling the mixture. The step of cooling the mixture is a step of cooling the mixture to adjust the viscosity ratio ($\eta1/\eta3$) between a viscosity $\eta1$ of the mixture measured by a rheometer under conditions of a measurement temperature of 25°C and a shear rate of 0.0001 (1/s) and a viscosity $\eta3$ of the mixture measured by a rheometer under conditions of a measurement temperature of 25°C and a shear rate of 0.0251 (1/s) to 60 or more. In short, the method for producing a thermally conductive composition of the present invention includes a step of preparing a mixture by mixing a curable compound, a thermally conductive filler, a structural viscosity imparting agent and additives as needed; a step of heating the mixture; and a step of cooling the mixture in that order. The thermally conductive composition of the present invention in which the viscosity ratio ($\eta1/\eta3$) is adjusted as described above can be obtained through the above steps.

Furthermore, the method for producing a supply form of the thermally conductive composition may include a step of filling a container with a mixture, after the step of preparing a mixture containing a curable compound, a thermally conductive filler and a structural viscosity imparting agent in the method for producing a thermally conductive composition described above. It is preferable that the step of heating the mixture and the step of cooling the mixture are performed after filling a container with the mixture.

A known mixing method may be suitably used in the step of preparing a mixture, and for example, materials may be mixed by a known kneader, kneading roll or mixer.

The heating temperature in the step of heating the mixture may be a temperature at which the structural viscosity imparting agent melts or more, and for example the heating temperature is equal to or higher than the melting point of the structural viscosity imparting agent. And preferably the heating temperature is equal to or higher than the temperature of 10°C above the melting point of the structural viscosity imparting agent and is equal to or lower than the temperature of 50°C above the melting point of the structural viscosity imparting agent. The upper limit of the heating temperature is not particularly limited, and for example is preferably 200°C or less from the viewpoint of the suppression of thermal degradation of the structural viscosity imparting agent. Furthermore, when the mixture includes a volatile component, it is preferable that the heating temperature is kept as low as possible, and for example, is preferably 100°C or less, and particularly preferably 80°C or less. The heating time is not particularly limited, and is set to a period of time in which the whole mixture is heated depending on the volume of the mixture. The heating time is for example, 5 to 1,000 minutes, and preferably 10 to 500 minutes. When the heating time is lower limit or more, even the inside of the mixture is sufficiently heated. When the heating time is the upper limit or less, and when the mixture includes a volatile substance, the volatile substance can be prevented from evaporating.

In the step of cooling the mixture, the above mixture after heating is cooled. The mixture is cooled until the temperature of the mixture reaches 25°C.

The method of cooling is not particularly limited, and the mixture may be cooled by a cooler or may be naturally cooled. It is preferable to cool the mixture rapidly using a cooler.

<Two-part curable thermally conductive material>

In the present invention, it is preferable to form a two-part curable thermally conductive material using the thermally conductive composition from the viewpoint of storage stability and the like.

More specifically, a two-part curable thermally conductive material composed of a first part consisting of a thermally conductive composition containing an epoxy compound, a thermally conductive filler and a structural viscosity imparting agent and having a viscosity ratio ($\eta1/\eta3$) of 60 or more and a second part consisting of a thermally conductive composition containing an epoxy curing agent, a thermally conductive filler and a structural viscosity imparting agent and having a viscosity ratio ($\eta1/\eta3$) of 60 or more is preferred.

The thermally conductive composition in the first part and the second part may also include the anti-settle down agent, the dispersant, the multifunctional acrylate compound and other additives described above. When the multifunctional acrylate compound is contained, it is preferable to contain the multifunctional acrylate compound in the thermally conductive composition of the first part described above.

The mass ratio between the first part and the second part (the second part/ the first part) is preferably 1, or a value closed to 1. The mass ratio is specifically preferably 0.9 to 1.1 and more preferably 0.95 to 1.05. A mass ratio between the first part and the second part of 1 or a value close to 1 allows a mixture of the first part and the second part to be easily prepared.

The present invention provides a supply form of a two-part curable thermally conductive material, composed of a combination of a first container filled with a first part consisting of a thermally conductive composition containing an epoxy compound, a thermally conductive filler and a structural viscosity imparting agent, and a second container filled with a second part consisting of a thermally conductive composition containing an epoxy curing agent, a thermally conductive filler and a structural viscosity imparting agent. The first container and the second container may be combined and integrated. The first container and the second container are integrated to facilitate the supply to the destination in the form of a container set. In the present description, the first container filled with the first part and the second container filled with the second part are sometimes collectively referred to as a container set.

Each of the first part and the second part has a viscosity ratio ($\eta1/\eta3$) between a viscosity $\eta1$ measured by a rheometer under conditions of a measurement temperature of 25°C and a shear rate of 0.0001 (1/s) and a viscosity $\eta3$ measured by a rheometer under conditions of a measurement temperature of 25°C and a shear rate of 0.0251 (1/s) of 60 or more.

As described above, the thermally conductive composition is prepared through a step of preparing a mixture, a step of heating the mixture, and a step of cooling the mixture. Thus, a mixture (thermally conductive composition) containing, for example, an epoxy compound, a thermally conductive filler and a structural viscosity imparting agent is prepared, and the mixture is put in the first container, and through the heating step and the cooling step, the first container in which the first part is put is prepared. Likewise, a mixture (thermally conductive composition) containing, for example, an epoxy curing agent, a thermally conductive filler and a structural viscosity imparting agent is prepared, and the mixture is put in the second container, and through the heating step and the cooling step, the second container in which the second part is put is prepared.

With the settling down of the thermally conductive filler suppressed, the first part put in the first container and the second part put in the second container are stored under excellent conditions. When in use, the first part and the second part are discharged from the first container and the second container, respectively, are mixed by a static mixer or the like, and cured to form a thermally conductive member. When the first part and the second part are discharged, a certain level of shear force is generated, resulting in reduced viscosity of the first part and the second part, and hence easy discharge. Furthermore, the coating formed after discharge has excellent handling properties as it can be easily compressed. This, for example, simplifies an operation of discharging a mixture of the first part and the second part into the space between a heating element and a heat dissipating element to form a coating having a certain level of thickness and then stretching the coating into a thin member with a small load.

Examples of the above first container and the second container include a syringe, a cartridge, a pail can and a drum.

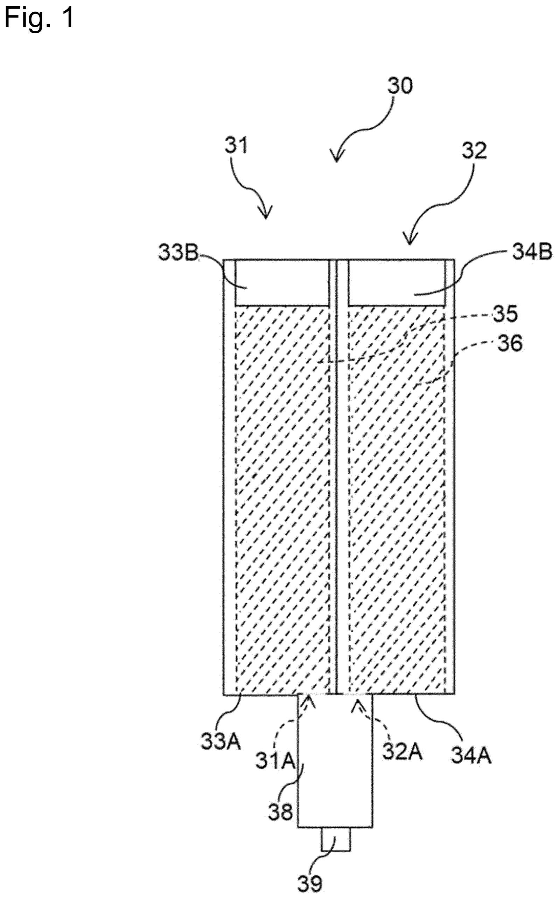

For example, when a syringe is used as the container, the supply form of a two-part curable thermally conductive material is composed of a combination of the first syringe filled with the first part and the second syringe filled with the second part. In this case the first syringe and the second syringe may be arranged side by side and integrated to prepare a two-part parallel type. In a two-part parallel type syringe 30, the first syringe 31 constituting the first container and the second syringe 32 constituting the second container are arranged side by side and integrated as shown in Fig. 1. The first part 35 and the second part 36 filled in the syringes 31 and 32 may be dispensed from the syringes and mixed using the syringes as dispensers.

Furthermore, when a cartridge is used, the supply form of a two-part curable thermally conductive material is composed of a combination of the first cartridge filled with the first part and the second cartridge filled with the second part. In this case the first cartridge and the second cartridge may also be arranged side by side and integrated to prepare a two-part parallel type.

The first part and the second part may be mixed by a mixer such as a static mixer. The static mixer 38, for example, is connected to the discharge port 31A of the first syringe 31 and the discharge port 32A of the second syringe 32 as shown in Fig. 1. The first part 35 and the second part 36 discharged from the respective discharge ports 31A, 32A can be mixed in the static mixer 38. The resulting mixture mixed in the mixer 38 may be discharged from the discharge port 39 of the mixer 38.

The respective syringes 31, 32 may have a structure in which the opening of the barrels 33A, 34A filled with each of the first part 35 and the second part 36 is closed with lids 33B, 34B. In the syringe 30 shown in Fig. 1, the lids 33B, 34B are removed, and the first part 35 and the second part 36 may be pushed by a piston (not shown) inserted through the opening, and discharged from the discharge ports 31A, 32A.

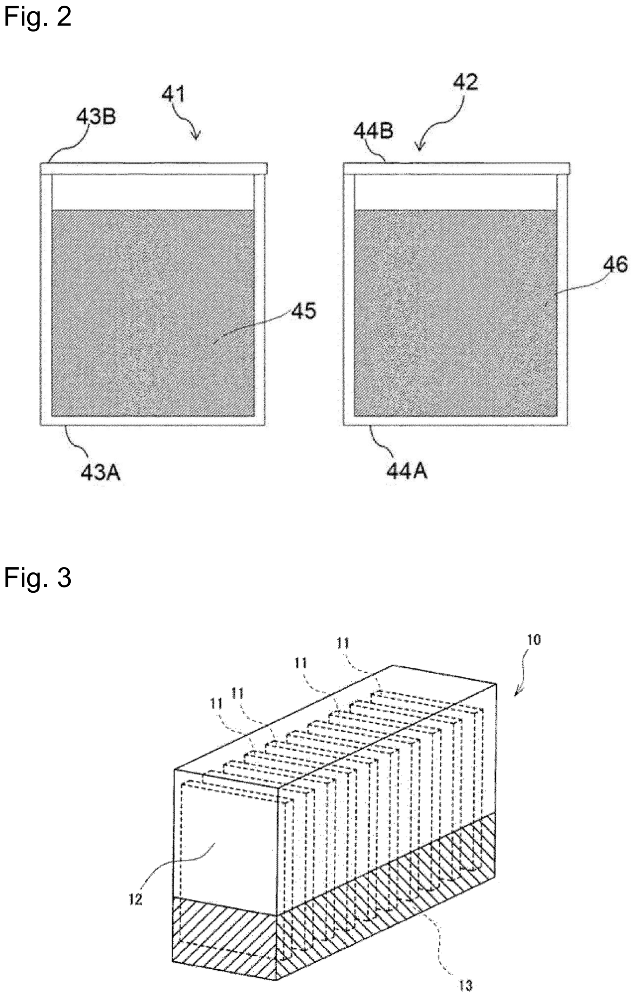

Furthermore, when a pail can is used, the container set may have the first pail can 41 that constitutes the first container and is filled with first part 45 and the second pail can 42 that constitutes the second container and is filled with the second part 46 as shown in Fig. 2. Each of the pail cans 41, 42 has a container body 43A, 44A with an opening, which is filled with the first part 45 and the second part 46, and the lids 43B, 44B which close the opening of the container bodies 43A, 44A.

<Thermally conductive member>

The present invention can also provide a thermally conductive member. The thermally conductive member is a cured product of the thermally conductive composition described above, or a cured product of the two-part curable thermally conductive material described above prepared by mixing and curing the first part and the second part.

For the thermally conductive member of the present invention, the thermally conductive composition, which is the raw material, can be handled well because the structural viscosity imparting agent is used, and thus workability when forming the thermally conductive member is excellent. Furthermore, settling down of thermally conductive filler in the thermally conductive composition, i.e., the raw material, is suppressed in storage, and the thermally conductive composition has uniform formulation. Thus, the formulation of the resulting thermally conductive member is also uniform, and variation in properties is small.

The thermally conductive member has a thermal conductivity of preferably 1.0 W/ m · K or more, more preferably 1.5 W/ m · K or more, and even more preferably 2.0 W/m · K or more. A thermal conductivity of the lower limit or more enhances thermally conductive properties. Thus, when the thermally conductive member is used, for example, as a gap filler for a battery cell module, heat generated in the battery cell can be effectively transferred to the module housing through the gap filler, and this suppresses excess increase in the temperature of the battery cell. The higher the thermal conductivity of the thermally conductive member, the better, but the thermally conductive member has a thermal conductivity of, for example, practically 15 W/ m · K or less. The thermal conductivity is measured according to ASTM D5470.

[Application]

The thermally conductive composition, the two-part curable thermally conductive material, the supply form of the two-part curable thermally conductive material and the thermally conductive member formed therefrom of the present invention can be used for various applications. They can be used for various electronic applications such as a battery assembly including a lithium ion battery (LiB) assembly, electric and electronic devices, electronic packaging, LEDs, solar cells and electric grid. Of these, they are preferably used in a battery assembly, and more preferably in a LiB assembly. Accordingly, in a preferable embodiment of the present invention, a battery assembly provided with the above thermally conductive member is provided. The battery assembly such as a LiB assembly can be preferably used in automobiles.

In the application of battery assemblies, the thermally conductive composition, the two-part curable thermally conductive material, the supply form of the two-part curable thermally conductive material and the thermally conductive member formed therefrom of the present invention are preferably used as a gap filler for battery assemblies. Furthermore, in an embodiment, the thermally conductive composition and the thermally conductive member of the present invention are preferably used in a battery module, and more preferably used as a gap filler in a battery module. The following is an example of the application of the thermally conductive member of the present invention to a battery module.

The thermally conductive member of the present invention may be used as a gap filler in a battery module as described below.

The battery module of the present invention has a gap filler consisting of the thermally conductive member, a plurality of battery cells, and a module housing that houses the plurality of battery cells, and the gap filler is arranged in the module housing.

The gap filler made of the thermally conductive member is put between battery cells, and between the battery cell and the module housing, and the gap filler put therein is closely attached to the battery cell and the module housing.

Accordingly, the gap filler between battery cells functions to keep the battery cells apart. Furthermore, the gap filler between the battery cell and the module housing is closely attached to both the battery cell and the module housing, and functions to transfer heat generated in the battery cell to the module housing.

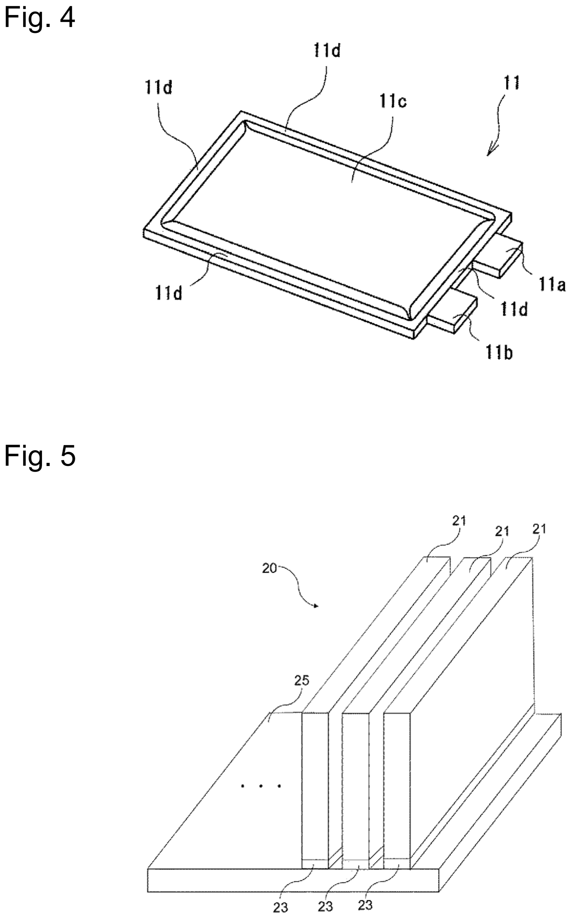

Fig. 3 illustrates a specific structure of the battery module. Fig. 4 illustrates a specific structure of the respective battery cells. As shown in Fig. 3, a plurality of battery cells 11 are arranged in the battery module 10. The battery cells 11 are sealed in flexible outer film by lamination, and the overall shape is a flat body that has a small thickness in relation to the height and width. As shown in Fig. 4, the positive electrode 11a and the negative electrode 11b of the battery cell 11 are exposed, and the center part 11c of the flat surface is designed to be thicker than the pressure-bonded end portion 11d.

As shown in Fig. 3, the respective battery cells 11 are arranged so that their flat surfaces are faced with each other. In the structure of Fig. 3, the plurality of battery cells 11 that are housed in the module housing 12 are not entirely covered with the gap filler 13 put therein. The gap filler 13 is put in the module housing 12 so that part of the space in the module housing (the bottom part) is filled with the gap filler 13. The gap filler 13 is put between battery cells 11 and between the battery cell 11 and the module housing 12. In this part the gap filler 13 is closely attached to the surface of the battery cell 11 and the inner surface of the module housing 12.

The gap filler 13 provided between the battery cells 11 adheres to the surfaces of the battery cells 11, the gap filler 13 itself has suitable elasticity and flexibility, and thus even when external force that displaces the space between the battery cells 11 is applied, the gap filler 13 can mitigate strain/deformation caused by the external force. Accordingly, the gap filler 13 functions to keep the battery cells 11 apart from each other.

The gap filler 13 provided in a gap between the battery cells 11 and the inner surface of the module housing 12 also tightly adheres to the surfaces of the battery cells 11 and the inner surface of the module housing 12. As a result, heat produced inside the battery cells 11 is transferred via the gap filler 13 adhering to the surfaces of the battery cells 11 to the inner surface of the module housing 12 to which the other surface of the gap filler 13 tightly adheres.

The gap filler 13 is formed in the battery module 10 by application of the thermally conductive composition or the two-part curable thermally conductive material which are in the form of liquid using a usual dispenser, and then curing the coating. For the two-part curable thermally conductive material, for example, the first container and the second container described above may be set on a dispenser, and the material is applied thereto by the dispenser.

The two-part curable thermally conductive material is easily stored, and if mixed immediately before use, the material is less likely to be cured in the operation of application using a dispenser, and can be rapidly cured after the application. Furthermore, application by the dispenser is preferred because the material can be put relatively deep into the housing 12 of the battery module 10.

For the gap filler 13 which covers the battery cell 11, preferably 20 to 100%, and more preferably 20 to 40% of one surface of the respective battery cells 11 is covered with the gap filler 13. When 20% or more of the surface is covered therewith, the battery cells 11 are held in a stable manner. Furthermore, sufficiently covering the battery cells which produce large amount of heat enhances efficiency of heat dissipation. Meanwhile, when 100% or less of the surface is covered therewith, heat generated in the battery cells 11 can be efficiently released. Furthermore, covering 40% or less suppresses weight increase and the reduction in workability. It is also preferable to cover the side of the battery cell 11 where electrodes 11a and 11b are located with the gap filler 13 in order to enhance efficiency of heat dissipation. It is more preferable to cover the whole of the electrodes 11a and 11b with the gap filler 13.

As described above, in the battery module 10, the heat generated in the battery cells 11 can be released to the module housing 12 through the gap filler 13.

It is also preferable to use the gap filler 13 in a battery pack having a plurality of battery modules 10 inside thereof. A battery pack generally has a plurality of battery modules 10 and a battery pack housing which stores the battery modules 10. In the battery pack, a gap filler 13 can be put between the battery module 10 and the battery pack housing. This allows the heat released to the module housing 12 as described above to be further released to the battery pack housing, enabling effective heat dissipation.

Furthermore, since the thermally conductive member of the present invention is used for the gap filler 13, workability in forming the gap filler 13 is high.

Furthermore, while the above description has illustrated examples of battery assemblies in which the battery assembly is a battery module or a battery pack with the battery module, the present invention can be applied to a battery assembly without a battery module, and for example, to a battery assembly with a cell-to-pack structure.

Fig. 5 is a schematic view of a battery assembly with a cell-to-pack structure. The battery assembly 20 with a cell-to-pack structure has a plurality of battery cells 21 and a battery pack housing, and the battery cells 21 are bonded to the base member 25 that constitutes the battery pack housing via a gap filler 23 composed of the thermally conductive member (a cured product of the thermally conductive composition). The base member 25 may form a cooling plate or the like. The gap filler 23 in the battery assembly 20 may be formed in the same manner as the formation of the gap filler 13 in the above battery module. For example, the gap filler 23 may be formed using a common dispenser. The thermally conductive composition of the present invention also has good workability when forming the gap filler 23. Furthermore, since the thermally conductive composition of the present invention has excellent compressibility, the battery cells 21 can be bonded to the base member 25 with high workability even in a battery assembly with a cell-to-pack structure.

Examples

Hereinafter the present invention will be described in detail with reference to Examples, but the present invention is not limited by these Examples.
The measurement method and the evaluation method in Examples are as follows.

[Viscosity]

In Examples 1 to 6 and Comparative Examples 1 and 2, the viscosity of the first part and the second part, which were the thermally conductive composition, was measured as follows.
The viscosity of the first part and the second part, which were a sample, was measured at various shear rates by using a rheometer. Using Rheometer MCR-302e made by Anton Paar, the temperature of the sample was adjusted to 85°C, which was the melting point or more of the respective structural viscosity imparting agents, with a Peltier plate and the sample was left for 5 minutes. Then the sample was cooled to 25°C at a cooling rate of 20°C/ minute and left for 10 minutes. Subsequently, the viscosity was measured while continuously changing the shear rate using a $\Phi$25 mm parallel plate. Viscosity $\eta$1 measured under the condition of a shear rate of 0.0001 (1/s), viscosity $\eta$3 measured under the condition of a shear rate of 0.0251 (1/s), and viscosity $\eta$2 measured under the condition of a shear rate of 25.1 (1/s) were measured and the viscosity ratio ($\eta$1/$\eta$3) was determined. Viscosities at a shear rate other than the above were also measured as shown in Table 1.

[Melting point of ester compound in thermally conductive composition]

In Examples 1 to 6, the melting point of the structural viscosity imparting agent in the thermally conductive composition was measured by the following method. More specifically, 20 mg of the first part or the second part, which was the thermally conductive composition, was precisely weighed in an aluminum cell, and then the melting point was measured using DSC-60 made by Shimadzu Corporation under nitrogen flow at a temperature increase rate of 10°C/min from 25°C to 90°C.

[Thermal conductivity]

The thermal conductivity of the first part and the second part, which were the thermally conductive composition, was determined by the measurement of thermal resistance using a measurement device according to ASTM D5470-06.
More specifically, the thermally conductive composition was arranged to a height that exceeds the thickness at the time of the measurement to cover the measurement die at the side of the heating element, and then the composition was sandwiched by a heat dissipating element and compressed at a load of 30 psi so that the thickness of the thermally conductive composition was 1.0 mm, 1.5 mm, 2.0 mm to measure the thermal resistance at each thickness. The thickness may be adjusted with a spacer. For these three values of thermal resistance, a graph of the thickness on the horizontal axis and the thermal resistance on the vertical axis was created, and an approximate straight line of the three points was obtained by the least-squares method. The slope of the approximate line is the thermal conductivity.
The thermal resistance was measured at 80°C by LW-9389 made by Long Win Science and Technology Corporation. The area of the measurement die was 1inch by 1inch.

[Evaluation of suppression of settling down]

For Examples 1 to 6 and Comparative Examples 1 and 2, suppression of settling down was evaluated as follows.
Suppression of settling down in each of the first part and the second part was evaluated as described below.
10 cc of the respective samples was put in a 15 cc transparent container (having a cylindrical shape with a diameter of 24 mm) and heated at the melting point of the structural viscosity imparting agent +10°C for 30 minutes. Next, the sample was naturally cooled in an atmosphere of 25°C until the temperature of the sample reached 25°C and allowed to stand for 1 day, and left for 30 days under an environment of 35°C, and then the condition of the sample was observed.
The first part and the second part of Examples and Comparative Examples were evaluated according to the following criteria to determine "Evaluation of suppression of settling down ". The lower-rated of the "Evaluation of suppression of settling down " of the first part and the second part was determined as "Evaluation of suppression of settling down (total)".

(Evaluation criteria)

5 No change in appearance
4 Small amount of liquid component exude at edge of surface
3 Small amount of liquid component exude at edge of surface, but liquid component do not flow even when container tilted
2 Small amount of liquid component exude at edge of surface, and liquid component flow when container tilted
1 Liquid component separated when viewed from side

[Evaluation of compressibility (compressibility)]

For Examples 1 to 6 and Comparative Examples 1 and 2, compressibility was evaluated as follows.
16.4 cc of the raw material of the first part and the raw material of the second part shown in the Tables was put in the first syringe and the second syringe, which were a two-part parallel type of 25 cc syringe, respectively. Next, the first part and the second part were heated to the melting point of the structural viscosity imparting agent +10°C, and after leaving for 15 minutes, the sample was cooled to 25°C and left for 10 minutes.
Subsequently, 2.5 cc of the sample (a mixture of the first part and the second part, mass ratio 1:1) was discharged to an aluminum plate using a static mixer. The material discharged was compressed by a 30 mm φ plunger (a jig for compression test) at a compression rate of 60 mm/ minute, and the value of the load at which the gap between the jigs was compressed to 0.380 mm was read and determined as the compressive load. The temperature for the compression test was 25°C. Compressibility was evaluated based on the value of compressive load according to the following criteria.

(Evaluation criteria)

5 Less than 250 N
4 250 N or more and less than 300 N
3 300 N or more and less than 350 N
2 350 N or more and less than 400 N
1 400 N or more

[Comprehensive evaluation]

The average value of the evaluation of suppression of settling down and the evaluation of compressibility in Examples and Comparative Examples was determined as comprehensive evaluation.
More specifically, the value of the comprehensive evaluation was calculated by the following equation.

Comprehensive evaluation = (evaluation of suppression of settling down (comprehensive) + evaluation of compressibility)/2

In Examples and Comparative Examples, the following components were used.

<Epoxy compound>

· Multifunctional epoxy compound: bisphenol F epoxy resin made by Mitsubishi Chemical Corporation, tradename "jER806", molecular weight 330, epoxy equivalent 165 g/eq, number of functional groups 2, viscosity (25°C) 400 mPa·s
· Monofunctional epoxy compound: aliphatic glycidyl ether (C12-14 aliphatic alcohol), tradename "EPOGOSEY ML" made by Yokkaichi Chemical Co., Ltd., epoxy equivalent 282 g/eq, number of functional groups 1, viscosity (25°C) 7 mPa·s

<Epoxy curing agent>

· Amine compound: trimethylolpropane poly(oxypropylene)triamine made by HUNTSMAN (tradename "T-403"), molecular weight 440, active hydrogen equivalent 73.3 g/eq, number of active hydrogen atoms of amino group = 6, functional group =3 × (-NH$_2$), viscosity (25°C) 0.07 Pa·s.

<Multifunctional acrylate compound>

· Multifunctional acrylate compound: dipentaerythritol hexaacrylate made by DAICEL-ALLNEX Ltd. "DPHA".

<Dispersant>

Polymer dispersant (acidic group-containing copolymer)

<Structural viscosity imparting agent (ester compound X solid at 25°C)>

· Stearyl stearate melting point 57°C, having 36 carbon atoms
· Behenyl behenate melting point 75°C, having 44 carbon atoms

For the measurement of the melting point, 20 mg of the structural viscosity imparting agent was precisely weighed in an aluminum cell, and then the melting point was measured using DSC-60 made by Shimadzu Corporation under nitrogen flow at a temperature increase rate of 10°C/ minute from 25°C to 90°C.

<Anti-settle down agent>

· Amide wax: fatty acid amide wax (melting point 122°C)
· Fumed silica: "AEROSIL 300" made by NIPPON AEROSIL CO., LTD, hydrophilic, specific surface area 300 m$^2$/g

<Thermally conductive filler>

Aluminum hydroxide 1: average particle size 1 μm
Aluminum hydroxide 2: average particle size 10 μm
Aluminum hydroxide 3: average particle size 50 μm
Aluminum hydroxide 4: average particle size 90 μm
Aluminum oxide (alumina): average particle size 45 μm

[Examples 1 to 6, Comparative Examples 1 and 2]

The first part and the second part were prepared based on the formulation shown in Tables 1 to 3, and viscosity was measured and suppression of settling down and compressibility were evaluated. The results are shown in Tables 1 to 3.

Table 1

| | | | | Example 1 | | Example 2 | | Example 3 | |
|---|---|---|---|---|---|---|---|---|---|
| | | | | First part | Second part | First part | Second part | First part | Second part |
| Curable compound | % by mass | Epoxy compound | Multifunctional epoxy compound (bisphenol F epoxy resin) | 6.3 | | 6.3 | | 6.3 | |
| | | | Monofunctional epoxy compound (fatty acid glycidyl ether) | 4.7 | | 4.7 | | 4.7 | |
| | | Amine compound | Trimethylolpropane poly(oxypropylene) triamine | | 14.5 | | 14.5 | | 14.5 |
| | | Multifunctional acrylate compound | Dipentaerythritol hexaacrylate | 4.7 | | 4.7 | | 4.7 | |
| Dispersant | | | Polymer dispersant | 0.10 | 0.10 | 0.10 | 0.10 | 0.10 | 0.10 |
| Structural viscosity imparting agent | | Ester compound | Stearyl stearate | 1.0 | 1.0 | | | 0.8 | 0.8 |
| | | | Behenyl behenate | | | 1.0 | 1.0 | | |
| Anti-settle down agent | | Amide wax | Fatty acid amide wax | | | | | 0.2 | 0.2 |
| | | Silica | Fumed silica | | | | | | |
| Thermally conductive filler | | Aluminum hydroxide | Aluminum hydroxide 1: average particle size 1 $\mu$m | 13.1 | 13.4 | 13.1 | 13.4 | 13.1 | 13.4 |
| | | | Aluminum hydroxide 2: average particle size 10 $\mu$m | 17.5 | 17.9 | 17.5 | 17.9 | 17.5 | 17.9 |
| | | | Aluminum hydroxide 3: average particle size 50 $\mu$m | 17.5 | 17.9 | 17.5 | 17.9 | 17.5 | 17.9 |
| | | | Aluminum hydroxide 4: average particle size 90 $\mu$m | 35.1 | 35.8 | 35.1 | 35.8 | 35.1 | 35.8 |
| | | Aluminum oxide | Alumina: average particle size 45 $\mu$m | | | | | | |
| | | Volume% of filler | | 68.5 | 68.9 | 68.5 | 68.9 | 68.5 | 68.9 |

| | | | | | Example 1 | | Example 2 | | Example 3 | |
|---|---|---|---|---|---|---|---|---|---|---|
| | | | | | First part | Second part | First part | Second part | First part | Second part |
| Evaluation | Viscosity (Pa*s) | η1 | Shear rate (1/s) | 0.0001 | 450870 | 397350 | 3057600 | 282100 | 1180100 | 993720 |
| | | | | 0.000199 | 273550 | 233750 | 1809500 | 177240 | 762820 | 585540 |
| | | | | 0.000398 | 162080 | 127790 | 916670 | 101850 | 449490 | 321440 |
| | | | | 0.000794 | 88164 | 67111 | 447120 | 56250 | 252210 | 170010 |
| | | | | 0.00158 | 47738 | 35377 | 217430 | 30678 | 135380 | 87625 |
| | | | | 0.00316 | 25133 | 18328 | 104730 | 16325 | 71238 | 41907 |
| | | | | 0.00631 | 13431 | 9785 | 50567 | 8788 | 36820 | 19534 |
| | | | | 0.0126 | 7763 | 5338 | 23981 | 4727 | 18564 | 9096 |
| | | η3 | | 0.0251 | 4933 | 2975 | 11926 | 2585 | 8173 | 4317 |
| | | | | 0.0501 | 3289 | 1701 | 6401 | 1479 | 4207 | 2193 |
| | | | | 0.1 | 2135 | 1009 | 3665 | 923 | 2510 | 1206 |
| | | | | 0.2 | 1367 | 625 | 2163 | 624 | 1609 | 741 |
| | | | | 0.398 | 900 | 425 | 1329 | 468 | 1053 | 492 |
| | | | | 0.794 | 611 | 319 | 820 | 388 | 756 | 342 |
| | | | | 1.58 | 433 | 249 | 548 | 310 | 578 | 269 |
| | | | | 3.16 | 318 | 188 | 350 | 248 | 444 | 225 |
| | | | | 6.31 | 232 | 145 | 248 | 179 | 319 | 186 |
| | | | | 12.6 | 150 | 114 | 150 | 120 | 215 | 136 |
| | | η2 | | 25.1 | 46 | 76 | 52 | 62 | 72 | 77 |
| | | | | 50.1 | 9 | 17 | 10 | 10 | 9 | 24 |
| | | | | 100 | 2 | 4 | 2 | 1 | 2 | 7 |
| | | | | | | | | | | |
| Viscosity ratio (η1/η3) | | | | | 91 | 134 | 256 | 109 | 144 | 230 |
| η2 | | | | | 46 | 76 | 52 | 62 | 72 | 77 |

EP 4 703 449 A1

|  | | Example 1 | | Example 2 | | Example 3 | |
| --- | --- | --- | --- | --- | --- | --- | --- |
|  | | First part | Second part | First part | Second part | First part | Second part |
|  | Melting point of ester compound in thermally conductive composition (°C) DSC | 45 | 45 | 61 | 61 | 45 | 45 |
|  | Thermal conductivity (W/m·K) | 1.6 | 1.4 | 1.6 | 1.4 | 1.6 | 1.4 |
|  | Evaluation of suppression of settling down | 5 | 4 | 5 | 5 | 5 | 5 |
|  | Evaluation of suppression of settling down (total) | 4 | | 5 | | 5 | |
|  | Compressibility | 5 | | 5 | | 5 | |
|  | Comprehensive evaluation | 4.5 | | 5 | | 5 | |

Table 2

| | | | | Example 4 | | Example 5 | | Example 6 | |
|---|---|---|---|---|---|---|---|---|---|
| | | | | First part | Second part | First part | Second part | First part | Second part |
| Curable compound | % by mass | Epoxy compound | Multifunctional epoxy compound (bisphenol F epoxy resin) | 7.0 | | 7.0 | | 7.0 | |
| | | | Monofunctional epoxy compound (fatty acid glycidyl ether) | 3.5 | | 3.5 | | 3.5 | |
| | | Amine compound | Trimethylolpropane poly(oxypropylene) triamine | | 10.2 | | 10.2 | | 10.2 |
| | | Multifunctional acrylate compound | Dipentaerythritol hexaacrylate | | | | | | |
| Dispersant | | | Polymer dispersant | 0.26 | 0.26 | 0.26 | 0.26 | 0.26 | 0.26 |
| Structural viscosity imparting agent | | Ester compound | Stearyl stearate | 0.43 | 0.43 | | | 0.34 | 0.34 |
| | | | Behenyl behenate | | | 0.43 | 0.43 | | |
| Anti-settle down agent | | Amide wax | Fatty acid amide wax | | | | | 0.09 | 0.09 |
| | | Silica | Fumed silica | | | | | | |
| Thermally conductive filler | | Aluminum hydroxide | Aluminum hydroxide 1: average particle size 1 $\mu$m | 14.1 | 14.1 | 14.1 | 14.1 | 14.1 | 14.1 |
| | | | Aluminum hydroxide 2: average particle size 10 $\mu$m | 18.8 | 18.8 | 18.8 | 18.8 | 18.8 | 18.8 |
| | | | Aluminum hydroxide 3: average particle size 50 $\mu$m | | | | | | |
| | | | Aluminum hydroxide 4: average particle size 90 $\mu$m | 37.6 | 37.6 | 37.6 | 37.6 | 37.6 | 37.6 |
| | | Aluminum oxide | Alumina: average particle size 45 $\mu$m | 18.8 | 18.8 | 18.8 | 18.8 | 18.8 | 18.8 |
| | | Volume% of filler | | 76.1 | 75.3 | 76.1 | 75.3 | 76.1 | 75.3 |
| Evaluation | Viscosity (Pa*s) | $\eta$1 | Shear rate (1/s) | 0.0001 | 295800 | 105660 | 537710 | 306620 | 723150 | 207670 |
| | | | | 0.000199 | 180900 | 59497 | 345410 | 184310 | 447410 | 126530 |

EP 4 703 449 A1

(continued)

| | | | | | Example 4 | | Example 5 | | Example 6 | |
|---|---|---|---|---|---|---|---|---|---|---|
| | | | | | First part | Second part | First part | Second part | First part | Second part |
| | | | | 0.000398 | 100900 | 30309 | 205530 | 99400 | 247230 | 69603 |
| | | | | 0.000794 | 54558 | 15867 | 116840 | 52215 | 129060 | 37077 |
| | | | | 0.00158 | 29530 | 8359 | 64192 | 27394 | 66386 | 19885 |
| | | | | 0.00316 | 16472 | 4430 | 34009 | 14367 | 33862 | 10519 |
| | | | | 0.00631 | 9756 | 2559 | 17743 | 8154 | 17453 | 5716 |
| | | | | 0.0126 | 6378 | 1691 | 9648 | 4938 | 8986 | 3256 |
| | η3 | | | 0.0251 | 4249 | 1174 | 5634 | 3186 | 5168 | 2038 |
| | | | | 0.0501 | 2734 | 823 | 3485 | 2094 | 3456 | 1384 |
| | | | | 0.1 | 1776 | 619 | 2255 | 1423 | 2511 | 996 |
| | | | | 0.2 | 1191 | 501 | 1493 | 1024 | 1749 | 754 |
| | | | | 0.398 | 847 | 422 | 1040 | 767 | 1207 | 607 |
| | | | | 0.794 | 639 | 361 | 763 | 590 | 909 | 494 |
| | | | | 1.58 | 505 | 299 | 574 | 443 | 671 | 382 |
| | | | | 3.16 | 401 | 228 | 422 | 314 | 498 | 264 |
| | | | | 6.31 | 284 | 163 | 292 | 214 | 337 | 165 |
| | | | | 12.6 | 149 | 111 | 158 | 137 | 149 | 106 |
| | η2 | | | 25.1 | 32 | 68 | 41 | 95 | 28 | 70 |
| | | | | 50.1 | 3 | 38 | 4 | 55 | 3 | 53 |
| | | | | 100 | 0 | 22 | 0 | 1 | 0 | 22 |
| | | | | | | | | | | |
| Viscosity ratio ($\eta1/\eta3$) | | | | | 70 | 90 | 95 | 96 | 140 | 102 |
| $\eta2$ | | | | | 32 | 68 | 41 | 95 | 28 | 70 |
| Melting point of ester compound in thermally conductive composition (°C) DSC | | | | | 45 | 45 | 61 | 61 | 45 | 45 |
| Thermal conductivity (W/m·K) | | | | | 2.9 | 2.76 | 2.9 | 2.76 | 2.9 | 2.76 |

EP 4 703 449 A1

(continued)

|  | Example 4 | | Example 5 | | Example 6 | |
| --- | --- | --- | --- | --- | --- | --- |
|  | First part | Second part | First part | Second part | First part | Second part |
| Evaluation of suppression of settling down | 5 | 4 | 5 | 4 | 5 | 4 |
| Evaluation of suppression of settling down (total) | 4 | | 4 | | 4 | |
| Compressibility | 5 | | 5 | | 4 | |
| Comprehensive evaluation | 4.5 | | 4.5 | | 4 | |

Table 3

| | | | | Comparative Example 1 | | Comparative Example 2 | |
|---|---|---|---|---|---|---|---|
| | | | | First part | Second part | First part | Second part |
| Curable compound | % by mass | Epoxy compound | Multifunctional epoxy compound (bisphenol F epoxy resin) | 6.3 | | 6.3 | |
| | | | Monofunctional epoxy compound (fatty acid glycidyl ether) | 4.7 | | 4.7 | |
| | | Amine compound | Trimethylolpropane poly(oxypropylene) triamine | | 14.5 | | 14.5 |
| | | Multifunctional acrylate compound | Dipentaerythritol hexaacrylate | 4.7 | | 4.7 | |
| Dispersant | | | Polymer dispersant | 0.10 | 0.10 | 0.10 | 0.10 |
| Structural viscosity imparting agent | | Ester compound | Stearyl stearate | | | | |
| | | | Behenyl behenate | | | | |
| Anti-settle down agent | | Amide wax | Fatty acid amide wax | | | | |
| | | Silica | Fumed silica | | | 1.0 | 1.0 |
| Thermally conductive filler | | Aluminum hydroxide | Aluminum hydroxide 1: average particle size 1 $\mu$m | 13.1 | 13.4 | 13.1 | 13.4 |
| | | | Aluminum hydroxide 2: average particle size 10 $\mu$m | 17.5 | 17.9 | 17.5 | 17.9 |
| | | | Aluminum hydroxide 3: average particle size 50 $\mu$m | 17.5 | 17.9 | 17.5 | 17.9 |
| | | | Aluminum hydroxide 4: average particle size 90 $\mu$m | 35.1 | 35.8 | 35.1 | 35.8 |
| | | Aluminum oxide | Alumina: average particle size 45 $\mu$m | | | | |
| | | Volume% of filler | | 68.5 | 68.9 | 68.5 | 68.9 |

(continued)

| Evaluation | Viscosity (Pa*s) | | Shear rate (1/-s) | | Comparative Example 1 | | Comparative Example 2 | |
|---|---|---|---|---|---|---|---|---|
| | | | | | First part | Second part | First part | Second part |
| | | η1 | | 0.0001 | 11070 | 2929 | 9624800 | 5862 |
| | | | | 0.000199 | 6393 | 1961 | 6629100 | 4502 |
| | | | | 0.000398 | 3610 | 1282 | 3761200 | 3145 |
| | | | | 0.000794 | 2231 | 809 | 1898200 | 2266 |
| | | | | 0.00158 | 1466 | 530 | 900760 | 1670 |
| | | | | 0.00316 | 1048 | 372 | 427740 | 1293 |
| | | | | 0.00631 | 776 | 275 | 198320 | 1003 |
| | | | | 0.0126 | 609 | 210 | 93823 | 790 |
| | | η3 | | 0.0251 | 506 | 164 | 43937 | 622 |
| | | | | 0.0501 | 441 | 131 | 21100 | 496 |
| | | | | 0.1 | 356 | 106 | 10495 | 396 |
| | | | | 0.2 | 256 | 86 | 5707 | 318 |
| | | | | 0.398 | 175 | 69 | 3501 | 258 |
| | | | | 0.794 | 120 | 57 | 2267 | 211 |
| | | | | 1.58 | 86 | 48 | 1422 | 173 |
| | | | | 3.16 | 65 | 42 | 833 | 143 |
| | | | | 6.31 | 51 | 37 | 503 | 116 |
| | | | | 12.6 | 41 | 32 | 297 | 88 |
| | | η2 | | 25.1 | 30 | 26 | 145 | 55 |
| | | | | 50.1 | 18 | 17 | 23 | 42 |
| | | | | 100 | 17 | 16 | 8 | 25 |
| | | | | | | | | |
| Viscosity ratio (η1/η3) | | | | | 22 | 18 | 219 | 9 |
| η2 | | | | | 30 | 26 | 145 | 55 |
| Melting point of ester compound in thermally conductive composition (°C) DSC | | | | | - | - | - | - |
| Thermal conductivity (W/m·K) | | | | | 1.6 | 1.4 | 1.6 | 1.4 |
| Evaluation of suppression of settling down | | | | | 3 | 1 | 5 | 3 |
| Evaluation of suppression of settling down (total) | | | | | 1 | | 3 | |
| Compressibility | | | | | 5 | | 1 | |
| Comprehensive evaluation | | | | | 3 | | 2 | |

The thermally conductive compositions of Examples 1 to 6 include a curable compound, a thermally conductive filler and a structural viscosity imparting agent, and has a viscosity ratio (η1/η3) of 60 or more, and meet the requirement of the present invention. In Examples, the results of the evaluation of suppression of settling down were good, which indicates that the settling down of the thermally conductive filler was inhibited during storage. The evaluation of compressibility was also good, showing that the handling properties were excellent.

By contrast, the thermally conductive composition of Comparative Example 1 does not include a structural viscosity imparting agent and has a viscosity ratio (η1/η3) of less than 60. Thus, the results of evaluation of suppression of settling down were poor and the storage stability was poor in Comparative Example 1.

Comparative Example 2 is an example of a thermally conductive composition in which fumed silica was mixed instead of the structural viscosity imparting agent. The evaluation of suppression of settling down was only slightly worse than in the case of Examples, but the evaluation of compressibility was much worse than in the case of Examples, indicating inferior handling properties.

Reference Signs List

10 Battery module
11, 21 Battery cell
12 Battery module housing (module housing)
13, 23 Gap filler
20 Battery assembly
25 Base member
30 Syringe
31 First syringe
31A Discharge port of first syringe
32 Second syringe
32A Discharge port of second syringe
33A, 34A Barrel
33B, 34B Lid of barrel
35, 45 First part
36, 46 Second part
38 Mixer
39 Discharge port of mixer
41 First pail can
42 Second pail can
43A, 44A Container body with opening
43B, 44B Lid for closing opening of container body

**Claims**

1. A thermally conductive composition comprising:

    at least one curable compound selected from the group consisting of an epoxy compound or an epoxy curing agent,
    a thermally conductive filler, and
    a structural viscosity imparting agent,
    the thermally conductive composition having a viscosity ratio ($\eta 1/\eta 3$) between a viscosity $\eta 1$ measured by a rheometer under conditions of a measurement temperature of 25°C and a shear rate of 0.0001 (1/s) and a viscosity $\eta 3$ measured by a rheometer under conditions of a measurement temperature of 25°C and a shear rate of 0.0251 (1/s) of 60 or more.

2. The thermally conductive composition according to claim 1, wherein the thermally conductive composition has a viscosity $\eta 2$ measured under conditions of a measurement temperature of 25°C and a shear rate of 25.1 (1/s) of 125 Pa·s or less.

3. The thermally conductive composition according to claim 1 or 2, wherein the structural viscosity imparting agent is a compound having a melting point of more than 25°C.

4. The thermally conductive composition according to claim 1 or 2, wherein the structural viscosity imparting agent is an ester compound having a melting point of more than 25°C and 120°C or less.

5. The thermally conductive composition according to claim 1, wherein the curable compound is an epoxy compound.

6. The thermally conductive composition according to claim 1, wherein the curable compound is an epoxy curing agent.

7. The thermally conductive composition according to claim 6, wherein the epoxy curing agent is an amine compound.

8. A two-part curable thermally conductive material, comprising a combination of a first part comprising the thermally conductive composition according to claim 5 and a second part comprising the thermally conductive composition according to claim 6.

9. A supply form of a two-part curable thermally conductive material, comprising a combination of

   a first container filled with a first part comprising a thermally conductive composition comprising an epoxy compound, a thermally conductive filler and a structural viscosity imparting agent, and
   a second container filled with a second part comprising a thermally conductive composition comprising an epoxy curing agent, a thermally conductive filler and a structural viscosity imparting agent,
   each of the first part and the second part having a viscosity ratio ($\eta 1/\eta 3$) between a viscosity $\eta 1$ measured by a rheometer under conditions of a measurement temperature of 25°C and a shear rate of 0.0001 (1/s) and a viscosity $\eta 3$ measured by a rheometer under conditions of a measurement temperature of 25°C and a shear rate of 0.0251 (1/s) of 60 or more.

10. A thermally conductive member, which is a cured product of the thermally conductive composition according to claim 1 or 2.

11. A thermally conductive member, which is a cured product of the two-part curable thermally conductive material according to claim 8.

12. A battery module comprising: a gap filler comprising the thermally conductive member according to claim 10; a plurality of battery cells; and a module housing that houses the plurality of battery cells, wherein the gap filler is arranged in the module housing.

13. A method for producing a thermally conductive composition, the method comprising performing:

   a step of preparing a mixture comprising at least one curable compound selected from the group consisting of an epoxy compound or an epoxy curing agent, a thermally conductive filler and a structural viscosity imparting agent;
   a step of heating the mixture; and
   a step of cooling the mixture to adjust a viscosity ratio ($\eta 1/\eta 3$) between a viscosity $\eta 1$ of the mixture measured by a rheometer under conditions of a measurement temperature of 25°C and a shear rate of 0.0001 (1/s) and a viscosity $\eta 3$ of the mixture measured by a rheometer under conditions of a measurement temperature of 25°C and a shear rate of 0.0251 (1/s) to 60 or more.

14. A method for producing a supply form of a thermally conductive composition, the method comprising performing:

   a step of preparing a mixture comprising at least one curable compound selected from the group consisting of an epoxy compound or an epoxy curing agent, a thermally conductive filler and a structural viscosity imparting agent;
   a step of filling a container with the mixture;
   a step of heating the mixture; and
   a step of cooling the mixture to adjust a viscosity ratio ($\eta 1/\eta 3$) between a viscosity $\eta 1$ of the mixture measured by a rheometer under conditions of a measurement temperature of 25°C and a shear rate of 0.0001 (1/s) and a viscosity $\eta 3$ of the mixture measured by a rheometer under conditions of a measurement temperature of 25°C and a shear rate of 0.0251 (1/s) to 60 or more.

Fig. 1

Fig. 2

Fig. 3

Fig. 4

Fig. 5

## INTERNATIONAL SEARCH REPORT

| | International application No. |
|---|---|
| | **PCT/JP2024/016292** |

| A. | CLASSIFICATION OF SUBJECT MATTER |
|---|---|

*C09K 5/14*(2006.01)i; *C08G 59/18*(2006.01)i; *C08K 3/013*(2018.01)i; *C08K 5/10*(2006.01)i; *C08L 63/00*(2006.01)i
FI:   C09K5/14 E; C08G59/18; C08K3/013; C08K5/10; C08L63/00 C

According to International Patent Classification (IPC) or to both national classification and IPC

| B. | FIELDS SEARCHED |
|---|---|

Minimum documentation searched (classification system followed by classification symbols)

C09K5/14; C08G59/00-59/72; C08K3/00-13/08; C08L1/00-101/16

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 6-17024 A (HUGHES AIRCRAFT CO.) 25 January 1994 (1994-01-25)<br>claims 1-9, paragraph [0015] | 1-14 |
| A | JP 2022-533511 A (HENKEL AG & CO. KGAA) 25 July 2022 (2022-07-25)<br>claims 1-14 | 1-14 |
| A | JP 2018-138634 A (MITSUBISHI CHEMICAL CORPORATION) 06 September 2018 (2018-09-06)<br>claims 1-5 | 1-14 |
| A | WO 2017/208907 A1 (HITACHI CHEMICAL COMPANY, LTD.) 07 December 2017 (2017-12-07)<br>claims 1-7 | 1-14 |
| A | JP 2011-132368 A (SEKISUI CHEMICAL CO., LTD.) 07 July 2011 (2011-07-07)<br>claims 1-19 | 1-14 |

☐ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **16 July 2024** | **30 July 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**
Information on patent family members

International application No.

**PCT/JP2024/016292**

| Patent document cited in search report | | | Publication date (day/month/year) | Patent family member(s) | | | Publication date (day/month/year) |
|---|---|---|---|---|---|---|---|
| JP | 6-17024 | A | 25 January 1994 | EP | 561048 | A2 | |
| | | | | claims 1-9, p. 3, lines 29-31 | | | |
| | | | | US | 5367006 | A | |
| JP | 2022-533511 | A | 25 July 2022 | WO | 2020/186379 | A1 | |
| | | | | claims 1-14 | | | |
| | | | | US | 2022/0002607 | A1 | |
| | | | | EP | 3938457 | A1 | |
| | | | | CN | 113574132 | A | |
| | | | | KR | 10-2021-0141492 | A | |
| | | | | CA | 3133486 | A1 | |
| | | | | MX | 2021011143 | A | |
| JP | 2018-138634 | A | 06 September 2018 | (Family: none) | | | |
| WO | 2017/208907 | A1 | 07 December 2017 | US | 2019/0338069 | A1 | |
| | | | | claims 1-19 | | | |
| | | | | JP | 2018-172695 | A | |
| | | | | KR | 10-2019-0003788 | A | |
| | | | | CN | 109312053 | A | |
| | | | | TW | 201817759 | A | |
| JP | 2011-132368 | A | 07 July 2011 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022116587 A